# EUROPÄISCHE PATENTSCHRIFT

(11) **EP 3 932 788 B1**
(45) Veröffentlichungstag und Bekanntmachung des Hinweises auf die Patenterteilung: **08.01.2025**
(21) Anmeldenummer: 21182524.5
(22) Anmeldetag: 29.06.2021
(51) Int. Cl.: B62H 3/00, B65D 85/68, B65D 81/05

(54) **VERPACKUNGSVORRICHTUNG FÜR EIN ZWEIRAD**
PACKAGING DEVICE FOR A BICYCLE
DISPOSITIF D'EMBALLAGE POUR UN DEUX ROUES

(30) Priorität: 30.06.2020 DE 102020117228; 30.06.2020 DE 202020104051 U
(43) Veröffentlichungstag der Anmeldung: 05.01.2022
(73) Patentinhaber: Mondi AG, 1030 Wien (AT); Polytec Integrative gemeinnützige GmbH, 56070 Koblenz (DE)
(72) Erfinder: Schmidt, Jürgen, 91595 Burgoberbach (DE); Sorch, Sergej, 56075 Koblenz (DE); Lanser, Marko, 56727 Mayen (DE)
(74) Vertreter: DTS Patent- und Rechtsanwälte PartmbB

(56) Entgegenhaltungen:
- EP-A1- 0 765 823
- WO-A1-2019/124516
- DE-U1- 202015 006 608
- JP-U- 3 210 642
- US-A- 2 273 544
- US-A- 2 629 487

## Beschreibung

Die vorliegende Erfindung betrifft eine Verpackungsvorrichtung zum Verpacken eines Zweirads, insbesondere eines Fahrrads.

Derartige Verpackungsvorrichtungen werden beispielsweise eingesetzt, um fabrikneue Zweiräder, insbesondere Fahrräder, vom Hersteller zum Händler und/oder zum Endkunden zu liefern. Insbesondere hat die Bedeutung des Direktverkaufs über das Internet an den Endkunden erheblich zugenommen. Auch ein Versand des Zweirads in umgekehrter Richtung, d.h. vom Händler oder vom Endkunden an den Hersteller, oder auch vom Endkunden an den Händler, zum Zwecke von Reparatur oder Wartungsarbeiten am Zweirad ist in der Praxis von Bedeutung.

Neben einer zuverlässigen Verpackung des Zweirads ist zur Einsparung von Transportkosten ein geringes Packmaß von Vorteil. Hierzu ist es bekannt, das Zweirad teilweise zerlegt zu verpacken. Beispielsweise wird das Vorderrad vom Zweiradrahmen entfernt, wohingegen das Hinterrad am Rahmen montiert bleibt. Der Lenker kann quer gestellt oder abgenommen werden. Weitere Zweiradteile und/oder Zubehör oder Ausrüstungsgegenstände werden üblicherweise zusammen mit dem Zweirad in der Verpackungsvorrichtung versandt.

Die EP 3 611 106 A1 beschreibt eine Transportvorrichtung für ein Zweirad aus einem Pappe- und/oder Kartonwerkstoff. Dabei wird das Zweirad auf einem Ständerelement positioniert. Eine deckelartige Umhüllung wird über das Fahrrad gestülpt. Diese Transportvorrichtung erweist sich als wenig flexibel im Hinblick auf unterschiedliche Zweiradgrößen und insbesondere den Versand von Fahrradteilen und/oder Zubehör.

Eine Fahrradtransportverpackung ist in der DE 20 2018 102 422 U1 beschrieben. Dabei wird das Fahrrad auf einem rinnenförmigen Ständerelement positioniert. Eine Umhüllung wird über das Ständerelement gestülpt. Ein Rahmenteil wird mittels eines Abstützelementes innenseitig an der Umhüllung fixiert. Dabei ist das Abstützelement durch Heißkleben oder durch Verschraubung zu fixieren, was sich als wenig handhabungsfreundlich erweist.

Die WO 2019/124516 A1 beschreibt eine Fahrradtransportverpackung mit einer Halterung für ein Hinterrad eines Zweirades. Die Halterung ist halbkreisförmig und als Rinne ausgestaltet und an die Größe des aufgenommenen Hinterrades angepasst. Bodenseitig sind zwei Stützkeile zum Anlegen an das Hinterrad vorhanden.

In der JP 3 210642 U ist eine gattungsgemäße Fahrradtransportverpackung offenbart. Aus aufgewickeltem Flachmaterial werden zwei Stützelemente geformt, von denen eines am Boden des Verpackungsbehälters angeordnet ist, zur Aufnahme eines Rades. Das andere Stützelement ist obenseitig auf das Rad aufgelegt und stützt das Rad relativ zum Mantel des Verpackungsbehälters ab. Eine vergleichbare Konstruktion, die Stützelemente mit Aufnahmeschlitzen für Räder aufweist, ist in der EP 0 765 823 A1 beschrieben.

Die DE 20 2015 006 608 U1 beschreibt eine Fahrradtransportverpackung mit zwei vertikal oberhalb voneinander an einem Boden bzw. einer Öffnung des Verpackungsbehälters angeordneten Stützelementen, die angrenzend an einen Mantel des Verpackungsbehälters angeordnet sind.

Auch die US 2,273,544 offenbart eine Fahrradtransportverpackung mit zwei Stützelementen für ein Rad. Eines der Stützelemente ist am Boden und das andere Stützelement am Mantel des Verpackungsbehälters unbeweglich festgelegt.

Weitere Transportvorrichtungen für Fahrräder sind in der DE 20 2009 005 489 U1 und in der US 2,629,487 beschrieben.

Aufgabe der vorliegenden Erfindung ist es, eine Verpackungsvorrichtung zum Verpacken eines Zweirads bereitzustellen, die einen zuverlässigen Transport des Zweirads ermöglicht.

Diese Aufgabe wird durch eine erfindungsgemäße Verpackungsvorrichtung zum Verpacken eines Zweirads mit einem Rahmen und zumindest einem daran montierten Rad gelöst, insbesondere eines Fahrrads, umfassend einen Boden, einen Mantel, der einen Aufnahmeraum für das Zweirad zumindest teilweise einfasst, und eine an einer dem Boden abgewandten Seite angeordnete Einführöffnung für das Zweirad, wobei die Verpackungsvorrichtung Längsseitenwände und Querseitenwände umfasst, die eine Längsrichtung und eine quer und insbesondere senkrecht dazu ausgerichtete Querrichtung definieren, wobei die Verpackungsvorrichtung ein vom Boden in den Verpackungsraum abstehendes erstes Stützelement umfasst und ein zweites Stützelement, das im Abstand zum Boden und vorzugsweise in Längsrichtung im Abstand zum ersten Stützelement angeordnet ist und eine Radaufnahme zwischen den Stützelementen gebildet ist, wobei die Stützelemente an einander abgewandten Seiten des Rades anlegbar sind, wobei das zweite Stützelement an einer Querseitenwand oder an einer Längsseitenwand des Mantels gehalten und dabei faltbar mit der Querseitenwand oder der Längsseitenwand verbunden ist, so dass die Stützelemente relativ zueinander zum Erweitern der Radaufnahme beweglich sind.

Bei der erfindungsgemäßen Verpackungsvorrichtung kann das vorzugsweise zumindest teilweise zerlegte Zweirad im Aufnahmeraum aufgenommen werden. Der Mantel, der Längsseitenwände und Querseitenwände umfasst, fasst den Aufnahmeraum zumindest teilweise und vorzugsweise vollständig ein. Hierbei ist insbesondere vorgesehen, dass das Zweirad in Längsrichtung im Aufnahmeraum ausgerichtet und aufgenommen ist. Untenseitig weist die Verpackungsvorrichtung einen Boden auf, der vorteilhafterweise mehrlagig ausgebildet sein kann und eine zuverlässige Abstützung des Zweirads nach unten erlaubt. Beispielsweise ist eine Bodenwand des Bodens vorgesehen, von der der Mantel absteht, so dass eine zuverlässige, insbesondere stoffschlüssige, Verbindung zwischen der Bodenwand und dem Mantel besteht. Obenseitig, dem Boden abgewandt, weist die Verpackungsvorrichtung eine Einführöffnung auf, durch die hindurch das Zweirad in den Aufnahmeraum eingebracht werden kann. Das Rad, insbesondere das am Rahmen montierte Hinterrad, ist in der Radaufnahme zwischen den Stützelementen positionierbar. Mittels des ersten Stützelementes kann das Rad und damit vorzugsweise der Rahmen gegen eine Bewegung in Längsrichtung gesichert werden. Mittels des zweiten Stützelementes kann das Rad günstigerweise gegen eine Bewegung in der Längsrichtung entgegengesetzt gesichert werden. Zusätzlich kann das zweite Stützelement vorzugsweise einen Niederhalter ausbilden, um das Rad in der Höhenrichtung zu fixieren.

Positions- und Orientierungsangaben wie beispielsweise "unten", "oben" oder dergleichen sind auf einen bestimmungsgemäßen Gebrauch der Verpackungsvorrichtung bezogen aufzufassen. Hierbei steht die Verpackungsvorrichtung mit einer Unterseite, einer Außenseite des Bodens, auf einer Aufstellfläche auf, und die Einführöffnung ist obenseitig im Abstand zur Aufstellfläche angeordnet.

Als vorteilhaft erweist es sich, dass das zweite Stützelement an einer Querseitenwand oder einer Längsseitenwand des Mantels gehalten ist. Auf diese Weise können die Einführöffnung und der Aufnahmeraum soweit wie möglich freigegeben werden.

Das zweite Stützelement ist faltbar mit der Quer- oder Längsseitenwand verbunden.

Die Stützelemente sind relativ zueinander zum Erweitern der Radaufnahme beweglich. Beim Verpacken des Zweirads ist dadurch die Handhabung der Verpackungsvorrichtung erleichtert. Darüber hinaus ist die Möglichkeit gegeben, mit der Verpackungsvorrichtung vielseitig Zweiräder unterschiedlicher Größe zuverlässig zu verpacken, indem die Größe der Radaufnahme an die Größe des Rades angepasst werden kann.

Günstig ist es, wenn der Boden mindestens ein Aufstellelement für das Rad, ein weiteres Rad des Zweirads und/oder eine Radgabel des Zweirades umfasst oder ausbildet. Auf diese Weise kann das Zweirad oder dessen Komponenten zuverlässig am Boden abgestützt werden.

Von Vorteil ist es, wenn das erste Stützelement ein vom Boden schräg nach oben in Längsrichtung vom zweiten Stützelement weg weisendes Anlageelement umfasst oder ausbildet. An dem Anlageelement kann das Rad zuverlässig abgestützt werden. Insbesondere kann das erste Stützelement gewissermaßen einen Bremskeil oder Unterlegkeil bilden, mit dem das Rad gegen eine Bewegung in Längsrichtung gesichert werden kann.

Das erste Stützelement ist in Querrichtung betrachtet vorzugsweise keilförmig.

Vorteilhafterweise weist das erste Stützelement in der Längsrichtung einen größeren Abstand zur nächstgelegenen Querseitenwand auf als das zweite Stützelement zu dieser Querseitenwand. Es zeigt sich in der Praxis, dass auf diese Weise die Fertigung und die Handhabung der Verpackungsvorrichtung verbessert werden können. Beispielsweise kann das zweite Stützelement an oder nahe einer Querseitenwand positioniert sein, wodurch ein möglichst gro-ßer Querschnitt der Einführöffnung und/oder des Aufnahmeraumes für ein erleichtertes Einsetzen des Zweirads geboten werden kann.

Das erste Stützelement ist in der Längsrichtung vorzugsweise unbeweglich am Boden angeordnet.

Vorzugsweise ist das zweite Stützelement bezogen auf eine Höhenrichtung der Verpackungsvorrichtung oberhalb einer Mitte zwischen dem Boden und der Einführöffnung angeordnet. Wenn die Verpackungsvorrichtung an einen Durchmesser des Rades in der Höhenrichtung angepasst ist, kann auf diese Weise sichergestellt werden, dass die Stützelemente unterhalb der Radachse und oberhalb der Radachse angelegt werden können, um das Rad unterhalb der Radachse mit dem ersten Stützelement und oberhalb der Radachse mit dem zweiten Stützelement abzustützen.

Am Boden ist zwischen dem ersten Stützelement und der nächstgelegenen Querseitenwand bevorzugt zumindest abschnittsweise eine Rinne angeordnet oder gebildet. In der Rinne kann das Rad zuverlässig aufgenommen werden.

In Querrichtung ist die Rinne vorzugsweise zumindest abschnittsweise von am Boden angeordneten Erhöhungen seitlich begrenzt. Vorteilhaftweise sind an beiden Seiten der Rinne Erhöhungen angeordnet. Die Erhöhungen sind beispielsweise quaderförmige oder kastenförmige Vorsprünge am Boden.

An mindestens einer Erhöhung ist vorteilhafterweise eine Ausnehmung gebildet zum Aufnehmen einer Verpackung für Zweiradteile und/oder Zweiradzubehör, seitlich neben der Rinne. Zweiradteile oder Zweiradzubehör kann/können zum Beispiel in einer Verpackung untergebracht werden. Die Verpackung kann in die Ausnehmung eingesetzt werden. Dies kann vorzugsweise mehrere Vorteile haben. In der Ausnehmung ist die Verpackung zuverlässig aufgenommen und während des Transports unbeweglich fixiert. Leerräume zwischen dem Zweirad und dem Mantel können ausgenutzt und dadurch das Packmaß möglichst geringgehalten werden. Beispielsweise ist die Verpackung angrenzend an eine Längsseitenwand positioniert. Vorzugsweise kann eine Abstützung des Zweirads an der Verpackung und dadurch eine zusätzliche Sicherung im Aufnahmeraum erfolgen.

An einer Erhöhung ist vorzugsweise eine Ausnehmung gebildet zum Aufnehmen eines Schaltwerkes und/oder einer Kette des Zweirads. Bei dem Schaltwerk und der Kette eines Fahrrads handelt es sich um empfindliche Komponenten. Um sicherzustellen, dass das Schaltwerk während des Transports geschützt ist, ist beispielsweise obenseitig an einer Erhöhung eine Ausnehmung gebildet, in die das Schaltwerk eingreifen kann. Vorzugsweise ist alternativ oder ergänzend eine Ausnehmung für die Kette an einer Erhöhung gebildet, um einen direkten Kontakt der Kette mit Komponenten der Verpackungsvorrichtung zu vermeiden. Dies ist beispielsweise aufgrund werkseitiger Einfettung der Kette und bei Fertigung der Verpackungsvorrichtung aus einem Papiermaterial, das hygroskopisch ist, von Vorteil.

Vorgesehen sein kann, dass der Boden ein Kippmoment auf das Zweirad ausübt in Richtung einer Längsseitenwand. Beispielsweise wirkt das Kippmoment in eine einem Schaltwerk abgewandte Richtung, um ein Kippen des Zweirads in Richtung des Schaltwerks nach Möglichkeit zu vermeiden.

Das Kippmoment kann beispielsweise durch Aufstellelemente erzielt werden, die relativ zu einer Kontaktebene der Verpackungsvorrichtung geneigt ausgebildet sind.

Das zweite Stützelement ist vorzugsweise am Mantel festgelegt. Dies erleichtert die Handhabung der Verpackungsvorrichtung, indem das zweite Stützelement nicht versehentlich abhandenkommen kann und beim Verpacken des Zweirades in Griffweite des Benutzers ist.

Beispielsweise ist das zweite Stützelement an einem Rand der Einführöffnung festgelegt, um einen möglichst großen Abstand der Stützelemente voneinander zu ermöglichen.

Von Vorteil ist es, wenn das zweite Stützelement von einer Einbringstellung, in der die Einführöffnung freigegeben ist, durch die Einführöffnung zumindest abschnittsweise in den Aufnahmeraum in eine Fixierstellung, in der das Stützelement in Eingriff mit dem Rad bringbar ist, und umgekehrt überführbar ist. Dies ermöglicht eine einfache Handhabung bei zugleich zuverlässiger Fixierung des Zweirads. In der Einbringstellung ist die Einführöffnung freigegeben, und der Benutzer kann das Zweirad in den Aufnahmeraum einführen und auf dem Boden abstellen. Dabei wird insbesondere das Rad zur Anlage an und/oder in Eingriff mit dem ersten Stützelement gebracht. Anschließend kann das zweite Stützelement von der Einbringstellung in die Fixierstellung überführt und zur Anlage an und/oder in Eingriff mit dem Rad gebracht werden, um dieses in der Radaufnahme zu fixieren.

Das zweite Stützelement weist vorteilhafterweise einen Aufnahmeschlitz für das Rad auf. Der Reifen und/oder die Felge kann zum Beispiel in den Aufnahmeschlitz eingreifen und darin vorzugsweise klemmend fixiert werden. Der Rand des Aufnahmeschlitzes, insbesondere bei einer Fertigung aus einem Papiermaterial, weist zum Beispiel faltbare Fixierelemente auf, um eine Größenanpassung des zweiten Stützelementes an Räder unterschiedlicher Breite zu ermöglichen.

Das zweite Stützelement ist in Querrichtung vorzugsweise formschlüssig im Aufnahmeraum angeordnet. Dies erlaubt es vorzugsweise, das Rad in der Querrichtung im Wesentlichen unbeweglich zu fixieren.

Das zweite Stützelement ist in Querrichtung betrachtet vorzugsweise keilförmig.

Im Hinblick auf ein möglichst geringes Packmaß erweist es sich als vorteilhaft, wenn ein Rad, beispielsweise das Vorderrad des Zweirads, für den Transport vom Rahmen demontiert ist. Die Abmessungen der Verpackungsvorrichtung in Längsrichtung und in der Höhenrichtung lassen sich dadurch reduzieren, wohingegen sich die Abmessung in der Querrichtung nicht oder nur gering erhöht.

Als vorteilhaft erweist es sich, wenn die Verpackungsvorrichtung, vorzugsweise bezogen auf die Längsrichtung zu der dem zweiten Stützelement abgewandten Seite des ersten Stützelementes, ein vom Boden abstehendes Vorsprungelement mit einer Verjüngung in Richtung des Aufnahmeraumes umfasst oder bildet. Ausgehend vom ersten Stützelement in von dem zweiten Stützelement weg weisender Richtung ist zum Beispiel am Boden das Vorsprungelement angeordnet. In den Aufnahmeraum hinein verjüngt sich das Vorsprungelement. Umgekehrt verbreitert sich das Vorsprungelement in Richtung auf den Boden. Das Vorsprungelement erlaubt beispielsweise eine Ausrichtung oder Zentrierung von Gabelenden des Rahmens, wenn die Gabel bei demontiertem Vorderrad auf den Boden aufgestellt wird.

Das Vorsprungelement ist in Längsrichtung betrachtet vorzugsweise keilförmig.

In Querrichtung ist bevorzugt seitlich neben dem Vorsprungelement ein jeweiliges Aufstellelement zum Anlegen eines Gabelendes einer Radgabel angeordnet. Das Vorsprungelement ist, wenn die Gabelenden auf den Aufstellelementen aufstehen, zwischen den Gabelenden positioniert. Beim Einführen der Radgabel können die Gabelenden wie erwähnt mittels des Vorsprungelementes ausgerichtet und dadurch die Positionierung der Radgabel in der Querrichtung sichergestellt werden.

Bei einer Fertigung der Verpackungsvorrichtung aus einem Papiermaterial ist vorzugsweise vorgesehen, dass die Aufstellelemente eine Mehrzahl von übereinanderliegenden Materiallagen eines Papiermaterials umfassen. Dadurch werden die Gabelenden zuverlässig vor Beschädigung geschützt.

Das Vorsprungelement weist beispielsweise einen Abstand zur nächstgelegenen Querseitenwand des Mantels auf oder ist dieser benachbart.

Von Vorteil ist es, wenn die Verpackungsvorrichtung ein drittes Stützelement umfasst, das im Abstand zum Boden sowie in Längsrichtung im Abstand zum ersten Stützelement und zweiten Stützelement angeordnet ist und zum Anlegen an den Rahmen ausgebildet ist, insbesondere ein Steuerrohr oder einen Vorbau. Über das dritte Stützelement kann ergänzend zur Abstützung des Rades eine weitere Abstützung am Rahmen sichergestellt werden. Hierbei ist das dritte Stützelement im Abstand zum Boden angeordnet und kann vorzugsweise einen Niederhalter für den Rahmen bilden. Beispielsweise liegt das Steuerrohr oder der Vorbau (am Grundrahmen montiert) am dritten Stützelement an oder steht mit diesem in Eingriff.

Vorzugsweise ist das dritte Stützelement bezogen auf eine Höhenrichtung der Verpackungsvorrichtung oberhalb einer Mitte zwischen dem Boden und der Einführöffnung angeordnet.

Als günstig erweist es sich, wenn das dritte Stützelement am Mantel festgelegt ist. Dadurch kann sichergestellt werden, dass das dritte Stützelement nicht unbeabsichtigterweise abhandenkommt und beim Verpacken des Zweirads in Griffweite des Benutzers ist.

Insbesondere kann das dritte Stützelement an einem Rand der Einführöffnung festgelegt sein.

Günstig ist es, wenn das dritte Stützelement an einer Querseitenwand oder einer Längsseitenwand des Mantels gehalten ist. Auf diese Weise kann eine möglichst große Querschnittsfläche der Einführöffnung und/oder des Aufnahmeraums zum erleichterten Einführen des Zweirads bereitgestellt werden.

Günstig ist es, wenn das dritte Stützelement faltbar mit der Quer-/ oder Längsseitenwand des Mantels verbunden ist, insbesondere bei einer Fertigung der Verpackungsvorrichtung aus einem Papiermaterial.

Von Vorteil ist es, wenn das dritte Stützelement von einer Einbringstellung, in der die Einführöffnung freigegeben ist, durch die Einführöffnung zumindest abschnittsweise in den Aufnahmeraum in eine Fixierstellung, in der das Stützelement zur Anlage an und/oder in Eingriff mit dem Rahmen bringbar ist, und umgekehrt überführbar ist. Dies verbessert die Handhabung der Verpackungsvorrichtung. In der Einbringstellung ist die Einführöffnung freigegeben, und der Benutzer kann das Zweirad in den Aufnahmeraum einführen. Das dritte Stützelement kann von der Einbringstellung in die Fixierstellung überführt werden und dadurch der Rahmen mittels des dritten Stützelementes fixiert werden.

Das dritte Stützelement weist vorzugsweise einen Aufnahmeschlitz für den Rahmen auf. Beispielsweise kann ein Steuerrohr oder ein Vorbau des Rahmens in den Aufnahmeschlitz eingreifen. Der Rand des Aufnahmeschlitzes kann zum Beispiel bei einer Fertigung aus einem Papiermaterial faltbare Fixierelemente umfassen, um eine Größenanpassung an Rahmen unterschiedlicher Abmessungen zu ermöglichen.

Das dritte Stützelement ist bevorzugt in Querrichtung formschlüssig im Aufnahmeraum positioniert. Dadurch kann eine zuverlässige Fixierung des Rahmens in der Querrichtung sichergestellt werden.

In der Querrichtung betrachtet ist das dritte Stützelement vorzugsweise keilförmig.

Das zweite und das dritte Stützelement sind bei einer bevorzugten Ausführungsform der Erfindung an einander gegenüberliegenden Querseitenwänden angeordnet. Insbesondere sind die Stützelemente am Rand der Einführöffnung gehalten und insbesondere faltbar daran gehalten. Die Stützelemente können vorzugsweise in voneinander weg weisenden Richtungen aus dem Aufnahmeraum heraus in eine jeweilige Einbringstellung überführt und von dieser zumindest abschnittsweise in den Aufnahmeraum hinein in eine jeweilige Fixierstellung überführt werden.

Die Verpackungsvorrichtung umfasst bevorzugt eine Umverpackung, die eine Bodenwand und den Mantel aufweist, und eine auf der Bodenwand angeordnete und in die Umverpackung eingelegte oder einlegbare Innenverpackung, die den Boden vorzugsweise zumindest abschnittsweise ausbildet. Wie bereits erwähnt kann der Boden insbesondere mehrlagig sein. Die Innenverpackung kann auf der Bodenwand der Umverpackung aufgestellt werden. Der Boden kann die Bodenwand und insbesondere Aufstellelemente für das Rad und/oder die Radgabel umfassen, wobei die Aufstellelemente von der Innenverpackung ausgebildet werden.

Die Innenverpackung umfasst insbesondere zumindest eines der Folgenden: erstes Stützelement, Vorsprungelement, Aufstellelement, Erhöhung neben der Rinne für das Rad, Stützteil. Auf das Stützteil wird nachfolgend noch eingegangen.

Günstig ist es, wenn die Innenverpackung in der Längsrichtung und/oder in der Querrichtung formschlüssig oder im Wesentlichen formschlüssig zwischen den Querseitenwänden und/oder den Längsseitenwänden angeordnet ist. Auf diese Weise ist die Innenverpackung in der Längsrichtung zwischen den Längsseitenwänden und in der Querrichtung zwischen den Querseitenwänden zuverlässig positioniert. Im Hinblick auf eine Abstützung des Zweirads an der Innenverpackung ist dadurch auch das Zweirad zuverlässig in der Längsrichtung und in der Querrichtung fixierbar.

Die Umverpackung und/oder die Innenverpackung ist vorzugsweise aus einem einteiligen Materialzuschnitt gebildet und aufgefaltet, insbesondere aus einem Papiermaterial.

Die Verpackungsvorrichtung umfasst bevorzugt eine Deckenwand zum Verschließen der Einführöffnung in einer Schließstellung. Beispielsweise ist die Deckenwand faltbar am Mantel gehalten. Nach dem Beladen des Aufnahmeraums kann die Deckenwand relativ zum Mantel gefaltet und dadurch die Einführöffnung geschlossen werden. An der Deckenwand ist vorzugsweise ein weiteres Wandelement gehalten, das zum Beispiel mit der Deckenwand faltbar verbunden ist. Das weitere Wandelement kann in der Schließstellung der Deckenwand zum Beispiel eine Längsseitenwand zumindest teilweise überdecken.

Günstig ist es, wenn ein Wandelement einer Längsseitenwand von einer Freigabestellung, in der an der Längsseitenwand eine Befüllöffnung gebildet ist, in eine Schließstellung überführbar ist, in der die Befüllöffnung verschlossen ist, und umgekehrt überführbar ist. Der Mantel kann an der Befüllöffnung geöffnet werden, so dass der Benutzer auf bessere Weise in den Aufnahmeraum eingreifen kann. Nach dem Beladen kann das Wandelement in die Schließstellung überführt werden. Vorzugsweise wird das Wandelement anschließend von dem vorstehend erwähnten Wandelement überdeckt, das mit der Deckenwand verbunden ist.

Von Vorteil ist es, wenn das Wandelement eine Klappe umfasst oder ausbildet, die nach außen umfaltbar und vorzugsweise bodenseitig an der Verpackungsvorrichtung fixierbar ist. Das Wandelement wird zum Beispiel an einem weiteren Wandelement der Längsseitenwand nach außen umgefaltet und bodenseitig fixiert. Auf diese Weise ist sichergestellt, dass das umgefaltete Wandelement nicht abhandenkommt und den Benutzer beim Beladen des Aufnahmeraumes nicht behindert.

Die erfindungsgemäße Verpackungsvorrichtung ist vorzugsweise aus einem Papiermaterial gefertigt, insbesondere aus Wellpappe. Beispielsweise kommt zumindest zweilagige Wellpappe zum Einsatz.

Die Komponenten der Verpackungsvorrichtung sind vorzugsweise aus einem jeweiligen einteiligen Zuschnitt aus Papiermaterial gefertigt. Beispielsweise wird die Innenverpackung und/oder die Umverpackung aus einem einteiligen Zuschnitt gefertigt und durch Auffalten gebildet. Weitere Komponenten der Verpackungsvorrichtung, insbesondere die nachfolgend erwähnten Aufnahmeteile und/oder Verpackungen für Zweiradteile und/oder Zubehör, sind vorzugsweise ebenfalls aus einem Papiermaterial gefertigt und ausgehend von einem einteiligen Zuschnitt auffaltbar.

Die Verpackungsvorrichtung ist bevorzugt frei von Verklebungen und/oder Verschraubungen.

Günstig ist es, wenn die Verpackungsvorrichtung im Aufnahmeraum ein Stützteil umfasst und ein Aufnahmeteil, wobei das Stützteil vom Boden absteht und eine Mehrzahl von Eingriffselementen umfasst, mit denen das Aufnahmeteil mit korrespondierenden Eingriffselementen in Eingriff steht, und wobei das Aufnahmeteil in einer Mehrzahl von Relativpositionen zum Stützteil positionierbar ist und Zweiradteile und/oder Zubehör am oder im Aufnahmeteil positionierbar sind. Zweiradteile und/oder Zubehör können, zum Beispiel in einer gesonderten Verpackung oder lose, über das Aufnahmeteil gehalten werden. Das Aufnahmeteil kann seinerseits auf dem Stützteil abgestützt werden. Zu diesem Zweck steht das Stützteil mit dem Aufnahmeteil über korrespondierende Eingriffselemente in Eingriff. Dabei besteht insbesondere die Möglichkeit, dass das Aufnahmeteil eine Mehrzahl von Relativpositionen zum Stützteil wahlweise einnehmen kann. Dies erweist sich als vorteilhaft, da die Position des Aufnahmeteils zum Beispiel an die Größe und Form des Zweirads und/oder weitere Zweiradteile im Aufnahmeraum angepasst werden kann.

Das Stützteil weist vorzugsweise eine Erstreckung in Längsrichtung auf und/ oder grenzt an eine Längsseitenwand an.

Die Verpackungsvorrichtung umfasst bevorzugt ein Aufnahmeteil für ein Rad des Zweirads, insbesondere ein Vorderrad, mit zwei im Abstand zueinander angeordneten Wandelementen, wobei das Aufnahmeteil frei im Aufnahmeraum positionierbar ist. Das demontierte Rad, insbesondere das Vorderrad, ist zwischen den beiden Wandelementen geschützt in den Aufnahmeraum einführbar. Die Wandelemente können zum Beispiel faltbar miteinander verbunden sein.

Ein Wandelement kann vorzugsweise eine sich von einem Rand zu einer Mitte erstreckende schlitzförmige Ausnehmung aufweisen. Dies bietet zum Beispiel die Möglichkeit, eine Radnabe durch die Ausnehmung hindurch zu führen, wobei an der Radnabe insbesondere eine Bremsscheibe gehalten sein kann.

Die nachfolgende Beschreibung einer bevorzugten Ausführungsform der Erfindung dient im Zusammenhang mit der Zeichnung der näheren Erläuterung der Erfindung. Es zeigen:
- Figur 1:: eine schematische Darstellung einer erfindungsgemäßen Verpackungsvorrichtung für Zweiräder in einer geöffneten Teilansicht sowie schematisch zu verpackende Zweiräder;
- Figur 2:: eine perspektivische Darstellung einer Umverpackung der Verpackungsvorrichtung aus Figur 1 in einem geöffneten Zustand;
- Figur 3:: eine perspektivische Darstellung einer Innenverpackung der Verpackungsvorrichtung aus Figur 1;
- Figur 4:: eine Innenansicht der Verpackungsvorrichtung aus Figur 1 mit darin aufgenommenem Zweirad in schematischer Darstellung;
- Figur 5:: eine Darstellung entsprechend Figur 4, wobei ein weiteres Rad in der Verpackungsvorrichtung aufgenommen ist;
- Figur 6:: eine vergrößerte Darstellung von Detail A in Figur 4;
- Figur 7:: eine Ansicht in Blickrichtung des Pfeiles "7" in Figur 4;
- Figur 8:: eine Ansicht in Blickrichtung des Pfeiles "8" in Figur 4;
- Figur 9:: eine vergrößerte Darstellung von Detail B in Figur 4;
- Figur 10:: einen flachgelegten Zuschnitt der Umverpackung in Figur 2 und weiterer Komponenten der Verpackungsvorrichtung;
- Figur 11:: einen flachgelegten Zuschnitt der Innenverpackung aus Figur 3;
- Figur 12:: einen flachgelegten Zuschnitt einer Komponente der Verpackungsvorrichtung;
- Figur 13:: eine perspektivische Darstellung eines Aufnahmeteils der Verpackungsvorrichtung; und

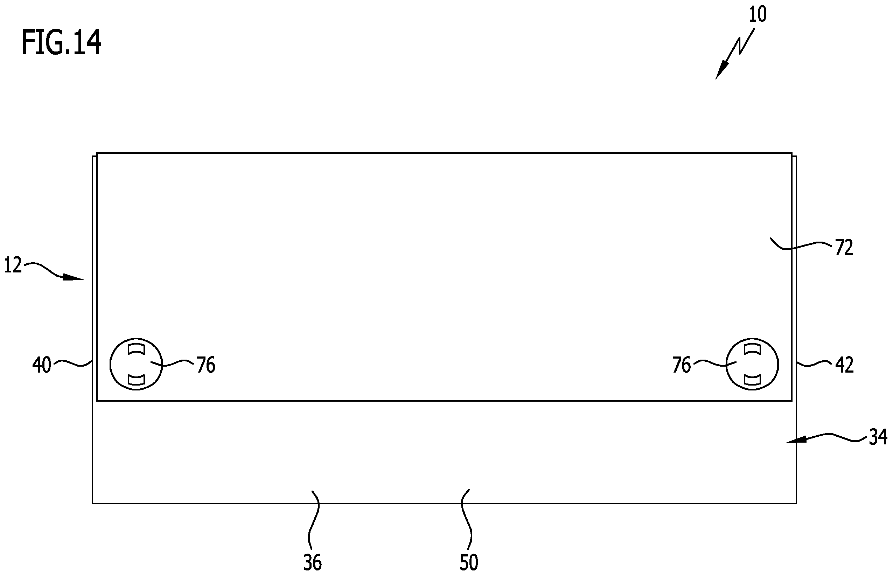

- Figur 14:: eine schematische Vorderansicht der Verpackungsvorrichtung im geschlossenen Zustand.

In der Zeichnung ist eine insgesamt mit dem Bezugszeichen 10 belegte vorteilhafte Ausführungsform einer erfindungsgemäßen Verpackungsvorrichtung mit einer Mehrzahl von zusammenwirkenden Komponenten dargestellt. Die Verpackungsvorrichtung 10 umfasst insbesondere eine Umverpackung 12, eine Innenverpackung 14, ein Aufnahmeteil 16 und ein Aufnahmeteil 18. Die Umverpackung 12, die Innenverpackung 14 und die Aufnahmeteile 16, 18 sind im vorliegenden Ausführungsbeispiel aus einem Papiermaterial gefertigt, insbesondere aus Wellpappe. Vorzugsweise kommt hier jeweils eine zumindest zweilagige Wellpappe zum Einsatz.

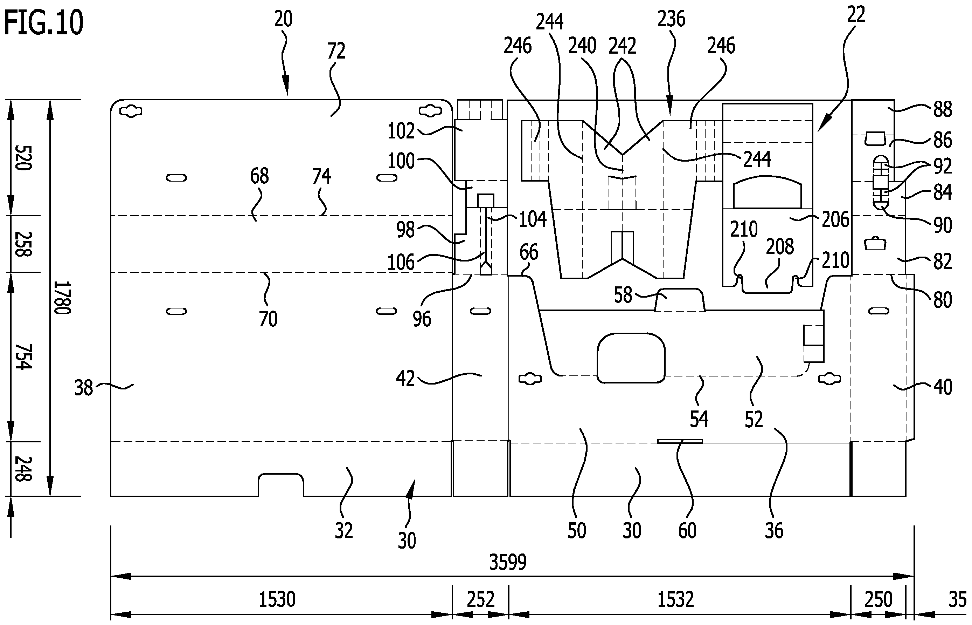

Die Zuschnitte in den Figuren 10, 11 und 12 sind jeweils einteilig und flachgelegt dargestellt. Gestrichelte und punktierte Linien stellen Faltlinien dar. Durchgezogene Linien stellen Trennlinien dar, insbesondere Stanzlinien.

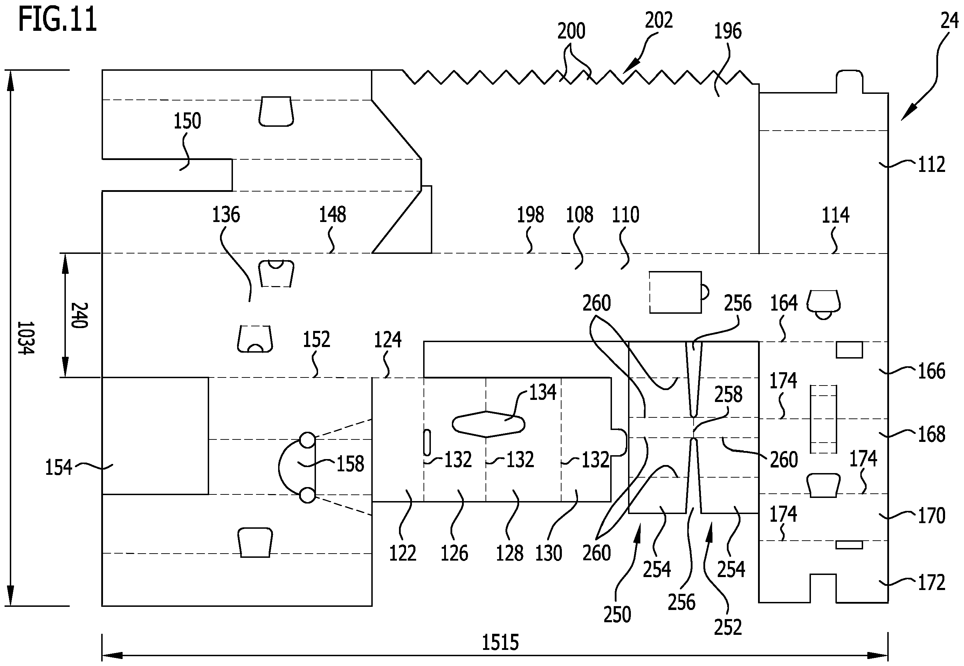

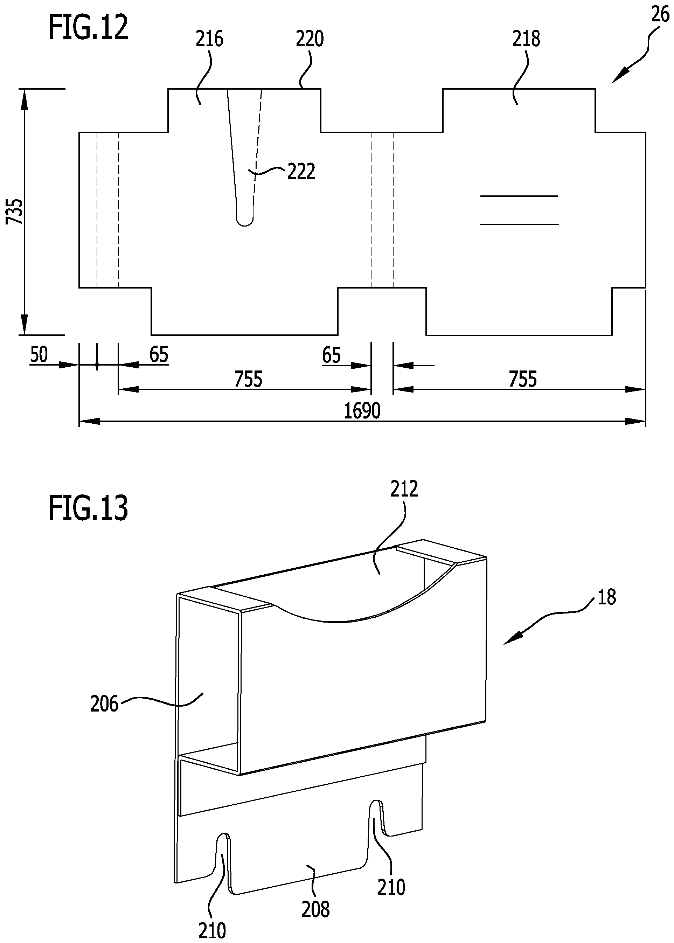

Figur 10 zeigt einen Zuschnitt 20 für die Umverpackung 12 und einen Zuschnitt 22 für das Aufnahmeteil 18. Figur 11 zeigt einen Zuschnitt 24 für die Innenverpackung 14. Figur 12 zeigt einen Zuschnitt 26 für das Aufnahmeteil 16. Die jeweiligen Komponenten 12 bis 18 können aus dem jeweiligen Zuschnitt 20 bis 26 aufgefaltet und in einen Gebrauchszustand überführt werden, in dem ein Zweirad wie nachfolgend erläutert für den Transport verpackt werden kann.

Umgekehrt können die Komponenten 12 bis 18 nach dem Gebrauch vorzugsweise wieder auseinandergefaltet und platzsparend bevorratet werden.

Die erfindungsgemäße Verpackungsvorrichtung kann bei einer bevorzugten Ausführungsform frei von Verklebungen und frei von Verschraubungen sein. Im vorliegenden Ausführungsbeispiel ist die Verpackungsvorrichtung 10 zum Beispiel durch Verkleben von Haltelaschen des Mantels an einer Bodenwand und durch Verkleben einer Haltelasche am Mantel in der aufgerichteten Stellung formstabil fixiert.

Die Verpackungsvorrichtung 10 dient zum Verpacken eines Zweirads 28. Im vorliegenden Beispiel handelt es sich bei dem Zweirad 28 insbesondere um ein Fahrrad, nachfolgend referenziert mit Bezugszeichen 28. Dabei ist vorgesehen, dass mit der Verpackungsvorrichtung 10 Fahrräder 28 unterschiedlicher Größe verpackt werden können. Wünschenswert ist beispielsweise der Einsatz für Fahrräder unterschiedlicher Gattung, zum Beispiel Rennräder, Gravelbikes, Mountainbikes, Triathlon-Räder u.a. Die zu verpackenden Räder weisen beispielsweise Rahmengrößen von 3XS bis 2XL auf. Die Verpackungsvorrichtung 10 kommt insbesondere für Räder mit Radgrößen von 26" bis 29" zum Einsatz.

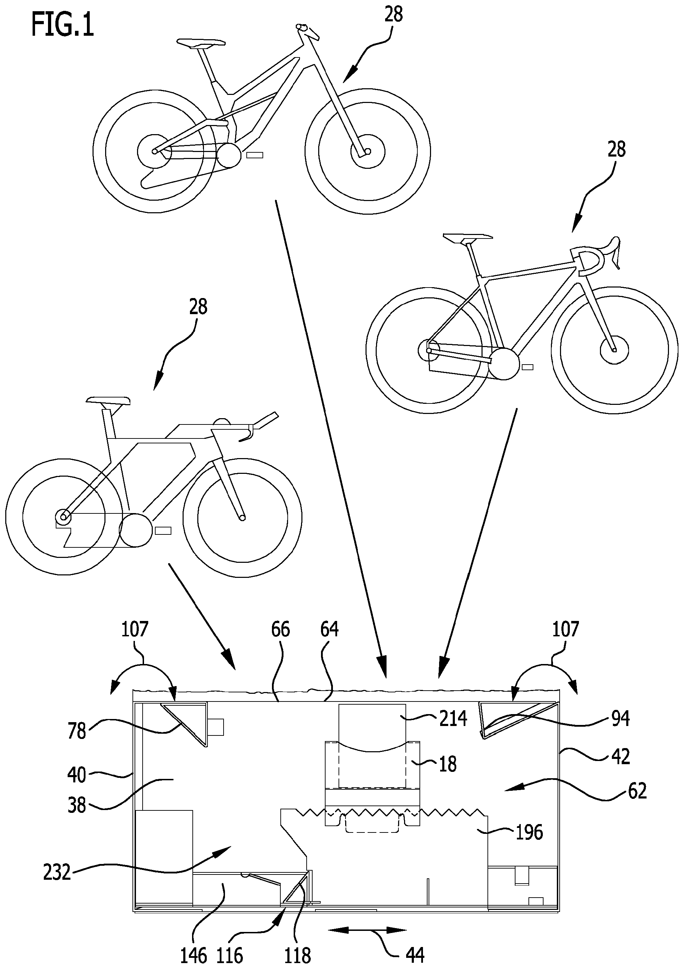

In der Figur 1 sind schematisch unterschiedliche Fahrräder 28 dargestellt, wobei dies lediglich der Illustration dient. Die Größenverhältnisse zwischen den Fahrrädern 28 und der Verpackungsvorrichtung 10 sind unzutreffend dargestellt.

Insgesamt weist die Verpackungsvorrichtung 10 Abmessungen auf, die sich aus den Figuren 10 bis 12 für die Zuschnitte 20 bis 26 ergeben. Die Zuschnitte 20 bis 26 sind insbesondere maßstäblich dargestellt. Es versteht sich, dass die in der Zeichnung dargestellten Größenangaben (in mm) nicht-limitierend für die vorliegende Erfindung sind. Jedoch zeigt sich der Praxis, dass eine unter Nutzung der Verpackungsvorrichtung 10 mit den angegebenen Abmessungen eine Vielzahl von Fahrrädern 28 unterschiedlicher Größe zuverlässig verpackt werden können.

Die Umverpackung 12 umfasst eine Bodenwand 30, die vorliegend mehrlagig ausgestaltet ist und insbesondere zwei übereinanderliegende Lagen 32 umfasst.

Von der Bodenwand 30 steht ein Mantel 34 ab. Der Mantel 34 weist zwei im Abstand zueinander angeordnete Längsseitenwände 36 und 38 auf, die über Querseitenwände 40 und 42, welche einander gegenüberliegend positioniert sind, miteinander verbunden sind. Die Längsseitenwände 36, 38 definieren eine Längsrichtung 44 und die Querseitenwände 40, 42 eine Querrichtung 46 der Verpackungsvorrichtung 10. Die Querseitenwände 40, 42 sind insbesondere an Schmalseiten und die Längsseitenwände 36, 38 an Längsseiten der Verpackungsvorrichtung 10 angeordnet. Eine Höhenrichtung 48 ist quer und insbesondere senkrecht zur Längsrichtung 44 und zur Querrichtung 46 ausgerichtet.

Positions- und Orientierungsangaben beziehen sich auf einen bestimmungsgemäßen Gebrauch der Verpackungsvorrichtung 10, die über die Bodenwand 30 auf einer nicht dargestellten Aufstellfläche aufsteht.

Die Längsseitenwand 36 ist im bestimmungsgemäßen Gebrauch einem Benutzer zugewandt und kann als Frontwand der Verpackungsvorrichtung angesehen werden. Die Längsseitenwand 36 umfasst ein unteres Wandelement 50, der Bodenwand 30 zugewandt, und ein oberes Wandelement 52. Das Wandelement 52 ist um eine Faltlinie 54 faltbar am Wandelement 50 gehalten. Das Wandelement 52 kann nach außen und nach unten zur Freigabe einer Befüllöffnung 56 gefaltet und bodenseitig an der Verpackungsvorrichtung 10 festgelegt werden. Hierzu kommt im vorliegenden Fall eine Lasche 58 zum Einsatz, die in eine korrespondierende Ausnehmung 60 unten am Wandelement 50 eingreifen kann. In diesem Fall liegen die Wandelemente 50, 52 flächig aneinander an.

Das Wandelement 52 kann umgekehrt von der Freigabestellung in eine die Befüllöffnung 56 verschließende Schließstellung überführt werden.

Der Mantel 34 fasst einen Aufnahmeraum 62 für das Fahrrad 28 ein. Über die Befüllöffnung 56 kann in den Aufnahmeraum 62 eingegriffen werden.

An der der Bodenwand 30 abgewandten Seite umfasst die Umverpackung 12 eine Einführöffnung 64. Durch die Einführöffnung 64 hindurch kann das Zweirad 28 in den Aufnahmeraum 62 eingeführt werden, sowie ferner Fahrradteile und/oder Zubehör. Es versteht sich, dass der Aufnahmeraum 62 alternativ oder ergänzend über die Befüllöffnung 56 befüllt werden kann.

Die Einführöffnung 64 wird von einem Rand 66 begrenzt. An der Längsseitenwand 36 ist der Rand 66 abschnittsweise in Richtung der Bodenwand 30 abgesenkt.

Die Umverpackung 12 umfasst ferner eine Deckenwand 68. Die Deckenwand 68 ist an der Längsseitenwand 38 um eine Faltlinie 70 faltbar gehalten. In einer Freigabestellung ist die Deckenwand 68 so weit nach hinten gefaltet, dass die Einführöffnung 64 freigegeben ist. Zum Verschließen der Verpackungsvorrichtung 10 kann die Deckenwand 68 nach vorne gefaltet und am Rand 66 zur Anlage gebracht werden.

An der Deckenwand 68 ist ein Wandelement 72 gehalten und relativ zur Deckenwand um eine Faltlinie 74 faltbar. Das Wandelement 72 ist an der der Längsseitenwand 38 abgewandten Seite der Deckenwand 68 angeordnet. Die Faltlinien 70, 74 verlaufen parallel zueinander.

Beim Verschließen der Verpackungsvorrichtung 10 überdeckt das Wandelement 72 einen Teil der Längsseitenwand 36. Dabei ragt das Wandelement 72 vorzugsweise zumindest bis zur Faltlinie 54 nach unten.

Verschlusselemente 76, die vorzugsweise manuell und werkzeuglos betätigbar sind, erlauben eine Verbindung des Wandelementes 72 mit der Längsseitenwand 36, um die Verpackungsvorrichtung 10 zu verschließen.

Die Umverpackung 12 umfasst ein Stützelement 78, bei dem es sich um ein zweites Stützelement im Sinne der vorliegenden Erfindung handelt.

Das Stützelement 78 ist vorliegend an der Querseitenwand 40 gehalten, insbesondere obenseitig am Rand 66. Mit der Querseitenwand 40 ist das Stützelement 78 faltbar über eine Faltlinie 80 verbunden.

Das Stützelement 78 ist keilförmig ausgestaltet mit einem ersten Segment 82, das sich in Richtung der Querseitenwand 42 erstreckt und am Rand 66 gehalten ist, einem in Richtung der Bodenwand 30 abgewinkelten zweiten Segment 84 und einem dritten Segment 86, das vom zweiten Segment 84 zurück in Richtung des ersten Segmentes 82 weist. Ein viertes Segment 88 liegt untenseitig am ersten Segment 82 an.

In der Querrichtung 46 ist das Stützelement 78 formschlüssig im Aufnahmeraum 62 angeordnet. In der Querrichtung 46 weist das Stützelement 78 eine Keilform auf.

Beispielsweise ist das erste Segment 82 parallel zur Bodenwand 30 ausgerichtet und das zweite Segment 84 parallel zur Querseitenwand 40.

Es versteht sich, dass sich obige Aussagen auf den Gebrauchszustand der Verpackungsvorrichtung 10 beziehen, bei dem das Stützelement 78 wie nachfolgend erläutert eine Fixierstellung einnimmt.

Das Stützelement 78 umfasst einen Aufnahmeschlitz 90, der vorliegend an den Segmenten 84 und 86 gebildet ist. Am Rand des Aufnahmeschlitzes 90 sind Fixierelemente 92 faltbar gehalten.

An der gegenüberliegenden Querseitenwand 42 ist ein weiteres Stützelement 94 vorgesehen, das ein drittes Stützelement im Sinne der vorliegenden Erfindung bildet.

Das Stützelement 94 ist an der Querseitenwand 42 gehalten, insbesondere obenseitig am Rand 66. Mit der Querseitenwand 42 ist das Stützelement 94 um eine Faltlinie 96 faltbar verbunden.

Das Stützelement 94 ist ebenfalls keilförmig gebildet mit einem ersten Segment 98, das sich in Richtung der Querseitenwand 40 erstreckt und am Rand 66 gehalten ist, einem nachfolgenden zweiten Segment 100, das sich in Richtung der Bodenwand 30 erstreckt. Ausgehend vom zweiten Segment 100 erstreckt sich ein drittes Segment 102 zurück in Richtung des ersten Segmentes 98.

Das Stützelement 94 ist ebenfalls keilförmig. In der Querrichtung 46 ist das Stützelement 94 formschlüssig im Aufnahmeraum 62 angeordnet. In der Querrichtung 46 weist das Stützelement 94 eine Keilform auf.

Beispielsweise ist das erste Segment 98 parallel zur Bodenwand 30 ausgerichtet und/oder das zweite Segment 100 parallel zur Querseitenwand 42.

Das Stützelement 94 weist einen Aufnahmeschlitz 104 auf, der vorliegend an den Segmenten 100, 102 gebildet ist. Am Rand umfasst der Aufnahmeschlitz 104 faltbare Fixierelemente 106.

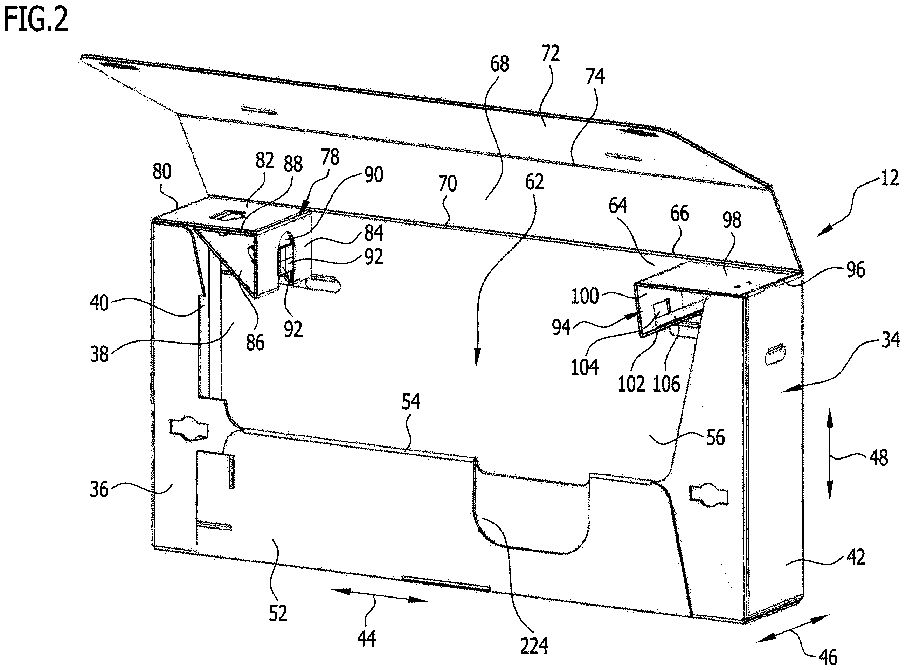

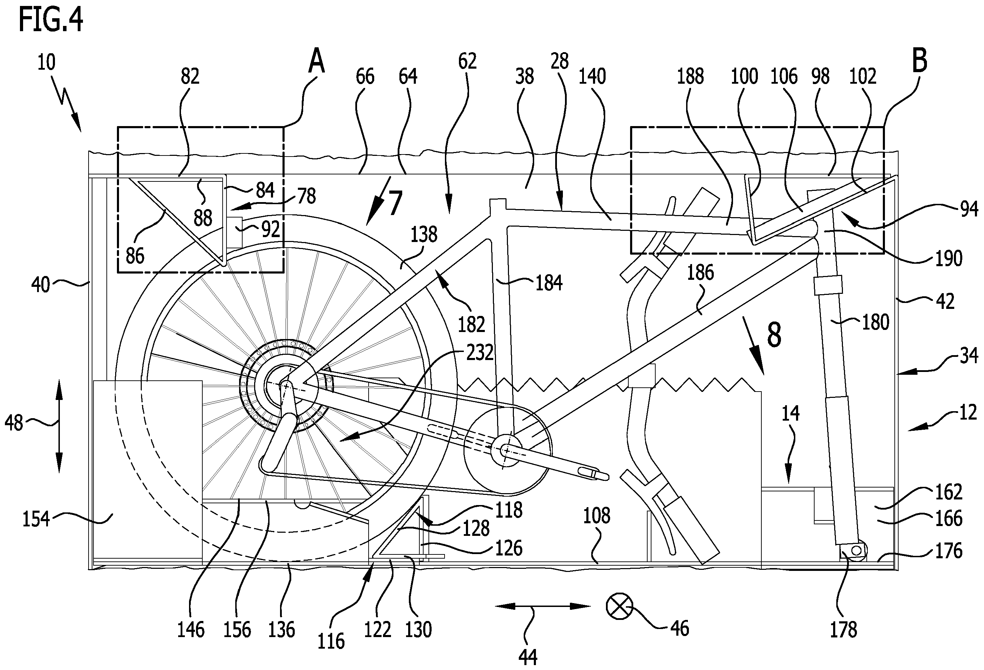

Die Figuren 1, 2, 4, 5, 8 und 9 zeigen die Stützelemente 78, 94 in einer beispielhaften Fixierstellung (hiervon Figur 2 ohne Fahrrad 28).

Bei geöffneter Deckenwand 68 können die Stützelemente 78, 94 aus dem Aufnahmeraum 62 heraus um die Faltlinien 80, 96 in eine Einbringstellung überführt werden. In der Einbringstellung ist die Einführöffnung 64 freigegeben, wodurch einem Benutzer das Einführen des Fahrrads 28 in den Aufnahmeraum 62 erleichtert ist. Umgekehrt können die Stützelemente 78, 94 in die Fixierstellung zurück überführt und wie nachfolgend erläutert in Eingriff mit dem Fahrrad 28 gebracht werden.

In Figur 1 symbolisieren Doppelpfeile 107 an den Stützelementen 78, 94 deren mögliche Verschwenkung relativ zum Mantel 34.

Aus obigen Erläuterungen geht hervor, dass die Stützelemente 78, 94 in der Höhenrichtung 48 oberhalb einer Mitte der Verpackungsvorrichtung 10 zwischen deren Boden und der Einführöffnung 64 angeordnet sind.

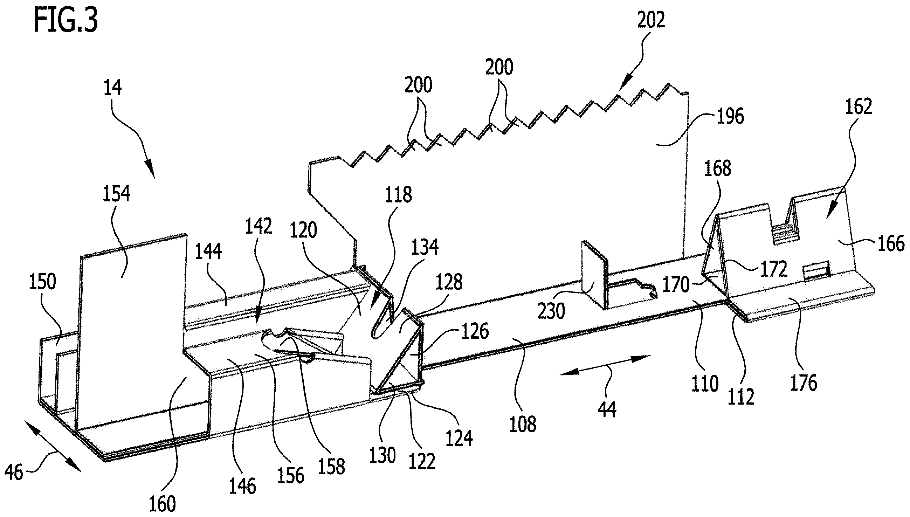

Die insbesondere anhand von Figur 3 erkennbare Innenverpackung 14 ist so bemessen, dass sie in der Längsrichtung 44 und in der Querrichtung 46 im Wesentlichen formschlüssig zwischen den Querseitenwänden 40, 42 bzw. den Längsseitenwänden 36 und 38 aufgenommen ist. Auf diese Weise ist die Innenverpackung 14 gegen Verschieben im Aufnahmeraum 62 gesichert.

Die Innenverpackung 14 liegt auf der Bodenwand 30 auf und umfasst ihrerseits eine Bodenwand 108. Die Bodenwand 108 ist abschnittsweise zweilagig und weist eine erste sich von der Querseitenwand 40 bis zur Querseitenwand 42 erstreckende obere Lage 110 auf. Angrenzend an die Querseitenwand 42 ist eine weitere Lage 112 vorgesehen, die unterhalb der Lage 110 angeordnet ist und relativ zu dieser um eine Faltlinie 114 faltbar ist.

Die Bodenwand 108 bildet zusammen mit der Bodenwand 30 einen Boden 116 der Verpackungsvorrichtung 10.

Vom Boden 116, insbesondere der Bodenwand 108, steht in den Aufnahmeraum 62 ein Stützelement 118 hervor. Das Stützelement 118 ist ein erstes Stützelement im Sinne der vorliegenden Erfindung.

Das Stützelement 118 ist in der Längsrichtung 44 vom Stützelement 78 beabstandet. Das Stützelement 118 weist einen Abstand von der Querseitenwand 40 auf. Vorliegend beträgt der Abstand ungefähr 40% der Erstreckung der Innenverpackung 14 und dementsprechend ungefähr 40% der Länge des Aufnahmeraumes 62 in der Längsrichtung 44. Der Abstand könnte abweichend sein. Vorteilhaft ist jedoch eine Positionierung des Stützelementes 118 näher an der Querseitenwand 40 als an der Querseitenwand 42.

Der Abstand des Stützelementes 118 von der nächstgelegenen Querseitenwand 40 in der Längsrichtung 44 ist größer als der Abstand des Stützelementes 78 von der Querseitenwand 40.

Das Stützelement 118 ist im vorliegenden Fall keilförmig gebildet. Ausgehend von der Bodenwand 108 weist das Stützelement 118 ein schräg nach oben, in der Längsrichtung 44 vom Stützelement 78 weg weisendes Anlageelement 120 auf.

Zum Auffalten des Stützelementes 118 kann ein Segment 122 um eine in Längsrichtung verlaufende Faltlinie 124 relativ zur Bodenwand 108 gefaltet werden. Weitere Segmente 126, 128 und 130 sind um jeweils in Querrichtung verlaufende Faltlinien 132 faltbar miteinander verbunden. In der Querrichtung 46 ist das Stützelement 118 auf diese Weise keilförmig. Das Segment 122 ist untenseitig angeordnet, das Segment 130 darüber. Das Segment 126 ragt von der Bodenwand 108 im Wesentlichen senkrecht nach oben, und das schräge Segment 128 zurück in Richtung der Bodenwand 108.

An den Segmenten 126 und 128 ist eine Ausnehmung 134 gebildet.

Vom Stützelement 118 in Richtung der Querseitenwand 40 bildet die Innenverpackung 14 ein Aufstellelement 136 für ein Rad 138 des Fahrrades 28. Das Rad 138 ist insbesondere das Hinterrad, das beim Verpacken am Rahmen 140 montiert bleibt.

Das Aufstellelement 136 bildet den Boden einer Rinne 142 der Innenverpackung 14. In der Querrichtung 46 ist die Rinne 142 durch eine jeweilige Erhöhung 144, 146 begrenzt.

Die Erhöhung 144 ist im Wesentlichen quaderförmig und der Längsseitenwand 38 zugewandt. Dabei kann ein Abschnitt des Zuschnittes 24 um eine Faltlinie 148 gefaltet und in sich zu der Quaderform aufgefaltet werden. Der Querseitenwand 40 benachbart ist obenseitig an der Erhöhung 144 eine Ausnehmung 150 angeordnet.

Die Erhöhung 146 ist der Längsseitenwand 36 zugewandt. Die Erhöhung 146 wird durch Auffalten eines Abschnittes des Zuschnittes 24 um eine Faltlinie 152 und anschließendes Auffalten in sich gebildet.

Der Querseitenwand 40 zugewandt weist die Erhöhung 146 ein Wandelement 154 auf. In Längsrichtung 44 davor ist ein abschnittsweise quaderförmiges und anschließend trapezförmiges Element 156 der Erhöhung 146 gebildet, das sich bis zum Stützelement 118 erstreckt. Obenseitig weist das Element 156 eine Ausnehmung 158 auf, die in der Längsrichtung 44 hinter der Ausnehmung 134 angeordnet ist.

An der der Rinne 142 abgewandten Seite ist neben dem Wandelement 154 eine Ausnehmung 160 gebildet.

Die Innenverpackung 14 umfasst ein von dem Boden 116 und insbesondere der Bodenwand 108 in den Aufnahmeraum 62 abstehendes Vorsprungelement 162. Das Vorsprungelement 162 ist in Längsrichtung 44 von den Stützelementen 78 und 118 beabstandet und insbesondere zu der dem Stützelement 78 abgewandten Seite des Stützelementes 118 angeordnet.

Im vorliegenden Fall ist das Vorsprungelement 162 angrenzend an die Querseitenwand 42 positioniert.

Das Vorsprungelement 162 ist durch Auffalten eines Abschnittes des Zuschnittes 24 relativ zur Bodenwand 108 um eine Faltlinie 164 und anschließendes Auffalten in sich gebildet. Hierbei werden aneinandergrenzende Segmente 166, 168, 170 und 172 um jeweilige in der Längsrichtung 44 verlaufende Faltlinien 174 gefaltet.

Das Vorsprungelement 162 ist in der Längsrichtung 44 keilförmig und weist ausgehend vom Boden 116 eine Verjüngung auf. Umgekehrt verbreitert sich das Vorsprungelement 162 in Richtung auf den Boden 116.

Die Segmente 166, 168 sind schräg bezüglich der Bodenwand 108 ausgerichtet. Das Segment 170 liegt auf der Bodenwand 108 auf, und das Segment 172 liegt untenseitig am Segment 166 an.

Seitlich neben dem Vorsprungelement 162, in der Querrichtung 46, sind Aufstellelemente 176 für Gabelenden 178 einer Radgabel 180 des Fahrrads 28 gebildet.

Der bereits erwähnte Rahmen 140 ist im vorliegenden Beispiel herkömmlich mit einem Hinterbau 182 (umfassend Kettenstreben und Sattelstreben), einem Sattelrohr 184, einem Unterrohr 186, einem Oberrohr 188 und einem Steuerrohr 190. Als Rahmenteil kann auch ein in der Zeichnung nicht dargestellter Vorbau, der am Steuerrohr 190 montiert ist, angesehen werden. Die Radgabel 180 ist im Steuerrohr 190 montiert. Ein Lenker 192 ist demontiert. Ein Vorderrad 194 ist ebenfalls demontiert.

Die Innenverpackung 14 umfasst ferner ein Stützteil 196. Das Stützteil 196 ist an der Bodenwand 108 um eine Faltlinie 198 auffaltbar und als Wandelement ausgebildet. Das Stützteil 196 ist angrenzend an die Längsseitenwand 38 positioniert.

An der der Bodenwand 108 abgewandten Seite umfasst das Stützteil 196 eine Mehrzahl von Eingriffselementen 200. Diese sind zackenförmig, so dass obenseitig am Stützteil 196 eine Zackenreihe 202 angeordnet ist.

Dem Stützteil 196 ist das Aufnahmeteil 18 zugeordnet. Das Aufnahmeteil 18 (Figur 13) ist im Wesentlichen quaderförmig mit einem rückwärtigen Wandelement 206, das untenseitig einen zungenartigen Vorsprung 208 und seitlich daneben schlitzartige Eingriffselemente 210 aufweist. Das Wandelement 206 kann mit dem Stützteil 196 in Eingriff gebracht werden, wobei die Eingriffselemente 200, 210 miteinander koppeln. In der Längsrichtung 44 kann das Aufnahmeteil 18 frei auf dem Stützteil 196 positioniert werden. Abhängig von Form und Größe des Fahrrads 28 kann auf diese Weise der bestmögliche Platz für das Aufnahmeteil 18 gewählt werden.

Obenseitig weist das Aufnahmeteil 18 eine Aufnahme 212 für Fahrradteile und/oder Zubehör auf. Beispielsweise können diese lose oder in einer gesonderten Verpackung 214 (Figur 1) in die Aufnahme 212 eingesetzt werden.

Ferner ist das Aufnahmeteil 16 zum Aufnehmen des Vorderrades 194 vorgesehen. Das Aufnahmeteil 16 umfasst zwei im Abstand zueinander angeordnete Wandelemente 216, 218. Die Wandelemente 216, 218 sind faltbar miteinander verbunden und nehmen zwischen sich das Vorderrad 194 auf.

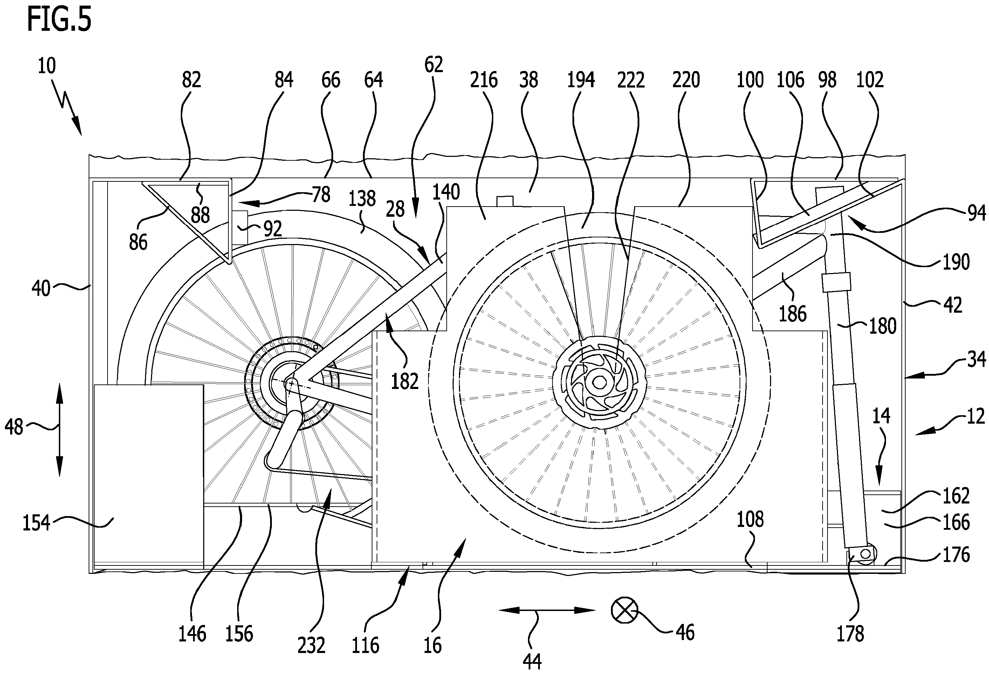

Ausgehend von einem Rand 220 erstreckt sich am Wandelement 116 eine im vorliegenden Beispiel schlitzförmige Ausnehmung 222 im Wesentlichen bis zu der Mitte eines der Wandelemente 216, 218. Eine Radnabe und eine Bremsscheibe des Vorderrades 194 kann beispielsweise durch die Ausnehmung 222 hindurchgreifen (Figur 5).

Um das Packmaß der Verpackungsvorrichtung 10 zu verringern, kann vorgesehen sein, dass die Längsseitenwand 36 eine Öffnung 224 umfasst, in die die Bremsscheibe eingreifen kann. Auf diese Weise kann die Erstreckung der Verpackungsvorrichtung 10 in der Querrichtung 46 gering gehalten werden.

Zum Verpacken des Zweirads 28 werden der Lenker 192 und das Vorderrad 194 demontiert.

Die Deckenwand 68 nimmt die Öffnungsstellung ein, und die Stützelemente 78, 94 nehmen die Einbringstellung ein. Die Einführöffnung 64 ist freigegeben. Das Wandelement 52 nimmt die Freigabestellung ein, so dass auch die Befüllöffnung 56 freigegeben ist.

Anschließend kann das teilweise zerlegte Fahrrad 28 in den Aufnahmeraum 62 eingeführt werden.

Das Hinterrad 138 wird in der Rinne 142 positioniert und kann in der Längsrichtung 44 vorne am Stützelement 118, insbesondere dem Anlageelement 120, anliegen. Auf diese Weise ist das Hinterrad 38 zusammen mit dem Rahmen 140 gegen eine Bewegung nach vorne gesichert. Das Stützelement 118 bildet einen Bremskeil oder Unterlegkeil.

Die Gabelenden 178 werden auf den Aufstellelementen 176 positioniert. Das Vorsprungelement 162 hilft hierbei bei der korrekten Ausrichtung und Zentrierung der Radgabel 180.

Anschließend können beispielsweise das Aufnahmeteil 16 mit dem Vorderrad 194 und das Aufnahmeteil 18 mit Zubehör in den Aufnahmeraum 62 eingelegt werden. Dabei kann das Aufnahmeteil 18 auf dem Stützteil 196 je nach verfügbarem Platz in der Längsrichtung 44 geeignet positioniert werden. Das Aufnahmeteil 16 mit dem Vorderrad 194 kann an geeigneter Position im Aufnahmeraum 62 angeordnet werden.

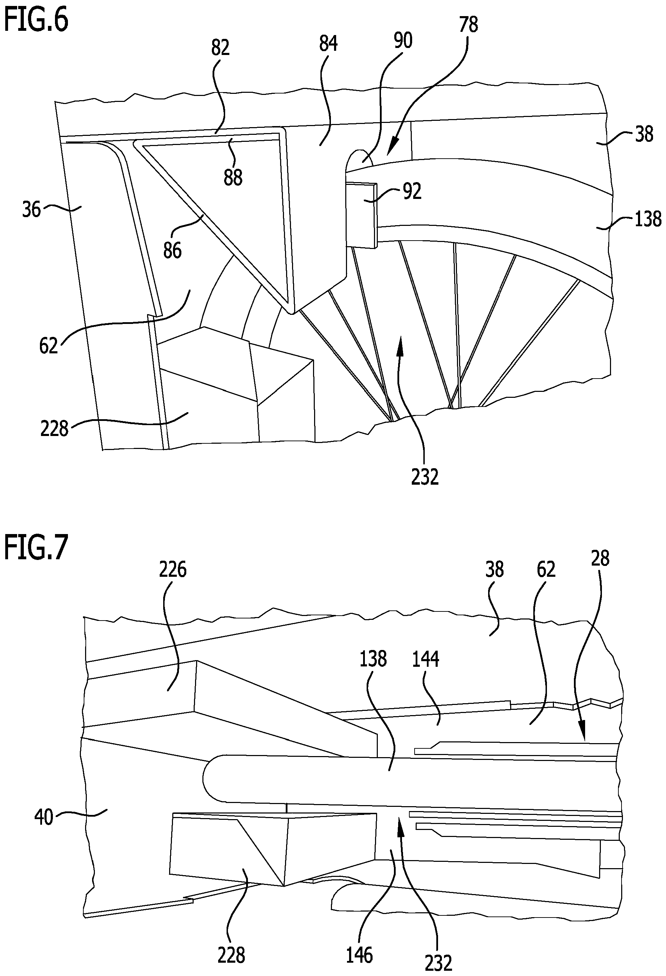

Fahrradteile und/oder Zubehör, vorzugsweise in Verpackungen 226, 228, werden beispielsweise in den Ausnehmungen 150 und 160 platziert (Figur 7). Dies sichert auch das Hinterrad 138 gegen Verkippen.

Ein Schaltwerk am Hinterrad 138 kann für verbesserten Schutz vorzugsweise in die Ausnehmung 158 eingreifen. Eine Kette kann zu demselben Zweck vorzugsweise in die Ausnehmung 158 und in die Ausnehmung 134 eingreifen. Dies ist im hier gezeigten Beispiel aufgrund der Größe des Rades 138 nicht der Fall.

Der Lenker 192 kann je nach Größe und Form in geeigneter Position und Ausrichtung in den Aufnahmeraum 62 gelegt werden.

Ein demontierter Sattel wird vorzugsweise mittels des Vorsprungelementes 162 gehalten. Dabei ist beispielsweise die Sattelstütze unterhalb der Segmente 166, 168 und oberhalb des Segmentes 170 angeordnet (nicht gezeigt). Ein beispielsweise mittels einer Lasche umgesetztes Stützelement 230 kann den Sattel in der Längsrichtung 44 fixieren.

Das Stützelement 78 kann von der Einbringstellung in eine Fixierstellung verschwenkt werden. Hierbei wird es so in den Aufnahmeraum 62 verschwenkt, dass das Hinterrad 138 in den Aufnahmeschlitz 90 eingreift (Figur 6). Über die Fixierelemente 92 kann eine Größenanpassung an unterschiedliche Radgrößen erfolgen.

In einer zwischen den Stützelementen 118 und 78 gebildeten Radaufnahme 232 ist das Hinterrad 138 zuverlässig gesichert. Die Stützelemente 78 und 118 liegen an einander abgewandten Seiten am Hinterrad 138 an. Hierbei kann insbesondere eine Abstützung unterhalb und oberhalb der Radachse erfolgen.

Das Stützelement 118 sichert gegen eine Bewegung nach vorne in der Längsrichtung 44. Das Stützelement 78 sichert gegen ein Verkippen in der Querrichtung 46 zur Seite und gegen eine Bewegung nach hinten in der Längsrichtung 44. Außerdem wirkt das Stützelement 78 als Niederhalter in Richtung auf den Boden 116.

Günstig ist es, dass die Radaufnahme 232 aufgrund der Relativbewegung der Stützelemente 78 und 118 durch Verschwenken des Stützelementes 78 erweiterbar und verkleinerbar ist. Zusätzlich zur der Möglichkeit, die Einführöffnung 64 zum Einführen des Hinterrades 138 freizugeben, besteht die Möglichkeit einer Größenanpassung der Radaufnahme 232 an unterschiedlich große Hinterräder 138.

Beispielsweise kann das Stützelement 78 bei kleineren Hinterrädern als dem hier beispielhaft gezeigten noch weiter in den Aufnahmeraum 62 verschwenkt werden, damit das Hinterrad so weit wie möglich in den Aufnahmeschlitz 90 eingreift.

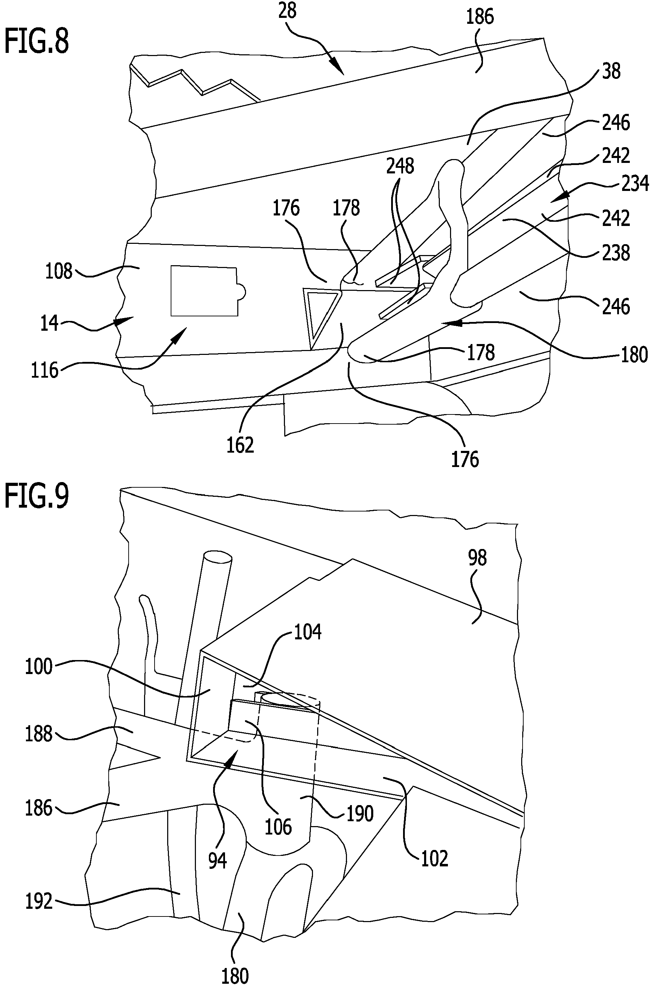

Das Stützelement 94 kann von der Einbringstellung in eine Fixierstellung verschwenkt werden. Hierbei wird das Stützelement 94 in den Aufnahmeraum 62 bewegt, bis der Rahmen 140 in den Aufnahmeschlitz 104 eingreift (Figur 9). Die Fixierelemente 106 ermöglichen eine Größenanpassung. Beispielsweise greift der Vorbau, das Steuerrohr 190 oder das Oberrohr 188 teilweise in den Aufnahmeschlitz 104 ein.

Das Stützelement 94 fixiert den Rahmen 140 in der Querrichtung 46 gegen Verkippen. Darüber hinaus wirkt das Stützelement 94 als Niederhalter in Richtung auf den Boden 116.

Beispielsweise kann das Stützelement 98 bei kleineren Rahmen 140 als dem hier beispielhaft gezeigten noch weiter in den Aufnahmeraum 62 verschwenkt werden, um den Rahmen 140 zu fixieren und damit der Rahmen 140 so weit wie möglich in den Aufnahmeschlitz 104 eingreift.

Anschließend kann das Wandelement 52 in die Schließstellung zum Verschlie-ßen der Befüllöffnung 56 überführt werden. Die Deckenwand 68 wird in die Schließstellung zum Verschließen der Einführöffnung 64 überführt. Das Wandelement 72 wird über die Längsseitenwand 36 bewegt und mittels der Verschlusselemente 76 fixiert.

Im vorliegenden Ausführungsbeispiel ist der Zuschnitt 22 für das Aufnahmeteil 18 auf demselben Bogen Papiermaterial angeordnet wie der Zuschnitt 20 für die Umverpackung 12.

Die Verpackungsvorrichtung 10 umfasst ein Stützteil 234, das ebenfalls aus einem einteiligen Zuschnitt 236 aus Papiermaterial und insbesondere Wellpappe gefertigt ist. Der Zuschnitt 236 ist auf demselben Bogen gebildet wie die Zuschnitte 20 und 22. Das Stützteil 234 ist in Figur 8 dargestellt.

Das Stützteil 234 dient der zusätzlichen Abstützung des Fahrrads 28, insbesondere an der der Querseitenwand 42 zugewandten Seite. Hierbei kann das Stützteil 234 insbesondere mit einem im Wesentlichen keilförmigen Vorsprung 238 zwischen die Schenkel der Radgabel 180 eingreifen. Der Vorsprung 238 wird durch Auffalten von zwei um eine Faltlinie 240 relativ zueinander faltbare Segmente 242 gebildet. Jedes Segment 242 ist seinerseits um eine Faltlinie 244 an einem weiteren Segment 246 faltbar.

Die Segmente 246 sind Basissegmente, die beispielsweise flächig im Aufnahmeraum 62 an der Querseitenwand 42 anliegen können.

Fixierelemente 248 sind am Stützteil 234 an den Segmenten 242 faltbar gehalten. Die Fixierelemente 248 können gespreizt und dadurch in einen etwaigen Zwischenraum zwischen den Schenkeln der Radgabel 180 und den Segmenten 166, 168 des Vorsprungelementes 162 angeordnet werden.

Die Verpackungsvorrichtung 10 umfasst ein Adapterteil 250, das im vorliegenden Fall ebenfalls aus einem einteiligen Zuschnitt 252 aus Papiermaterial, insbesondere Wellpappe, gefertigt ist. Der Zuschnitt 252 ist im vorliegenden Ausführungsbeispiel auf demselben Bogen angeordnet wie der Zuschnitt 24 der Innenverpackung 14.

Das Adapterteil 250 umfasst zwei Segmente 254, die voneinander abschnittsweise durch zwei schlitzförmige Ausnehmungen 256 getrennt und an einer Faltlinie 258 faltbar miteinander verbunden sind. Die Faltlinie 258 ist zwischen den Ausnehmungen 256 angeordnet.

Jedes Segment 254 kann entlang einer Mehrzahl parallel verlaufender Faltlinien 260 in sich gefaltet werden.

Das Adapterteil 250 kann im Falle schmaler Bereifung insbesondere über das Hinterrad 138 so gelegt werden, dass ein sich quer über die Faltlinie 258 erstreckender Streifen des Adapterteils 250 in Umfangsrichtung des Mantels ausgerichtet ist. An den Faltlinien 260 können die Segmente 254 gefaltet und dadurch an Flanken des Rades 138 angepasst werden.

Das Adapterteil 250 wird über das Rad 138 gelegt und zusammen mit diesem in den Aufnahmeschlitz 90 eingeführt.

### Bezugszeichenliste

10 Verpackungsvorrichtung
12 Umverpackung
14 Innenverpackung
16, 18 Aufnahmeteil
20, 22, 24, 26 Zuschnitt
28 Zweirad/Fahrrad
30 Bodenwand
32 Lage
34 Mantel
36, 38 Längsseitenwand
40, 42 Querseitenwand
44 Längsrichtung
46 Querrichtung
48 Höhenrichtung
50, 52 Wandelement
54 Faltlinie
56 Befüllöffnung
58 Lasche
60 Ausnehmung
62 Aufnahmeraum
64 Einführöffnung
66 Rand
68 Deckenwand
70 Faltlinie
72 Wandelement
74 Faltlinie
76 Verschlusselement
78 Stützelement
80 Faltlinie
82, 84, 86, 88 Segment
90 Aufnahmeschlitz
92 Fixierelement
94 Stützelement
96 Faltlinie
98, 100, 102 Segment
104 Aufnahmeschlitz
106 Fixierelement
107 Doppelpfeil
108 Bodenwand
110, 112 Lage
114 Faltlinie
116 Boden
118 Stützelement
120 Anlageelement
122 Segment
124 Faltlinie
126, 128, 130 Segment
132 Faltlinie
134 Ausnehmung
136 Aufstellelement
138 Rad/Hinterrad
140 Rahmen
142 Rinne
144, 146 Erhöhung
148 Faltlinie
150 Ausnehmung
152 Faltlinie
154 Wandelement
156 Element
158, 160 Ausnehmung
162 Vorsprungelement
164 Faltlinie
166, 168, 170, 172 Segment
174 Faltlinie
176 Aufstellelement
178 Gabelende
180 Radgabel
182 Hinterbau
184 Sattelrohr
186 Unterrohr
188 Oberrohr
190 Steuerrohr
192 Lenker
194 Rad/Vorderrad
196 Stützteil
198 Faltlinie
200 Eingriffselement
202 Zackenreihe
206 Wandelement
208 Vorsprung
210 Eingriffselement
212 Aufnahme
214 Verpackung
216, 218 Wandelement
220 Rand
222 Ausnehmung
224 Öffnung
226, 228 Verpackung
230 Stützelement
232 Radaufnahme
234 Stützteil
236 Zuschnitt
238 Vorsprung
240 Faltlinie
242 Segment
244 Faltlinie
246 Segment
248 Fixierelement
250 Adapterteil
252 Zuschnitt
254 Segment
256 Ausnehmung
258, 260 Faltlinie

## Patentansprüche

1. Verpackungsvorrichtung zum Verpacken eines Zweirads (28) mit einem Rahmen (140) und zumindest einem daran montierten Rad (138), insbesondere eines Fahrrads (28), umfassend
einen Boden (116), einen Mantel (34), der einen Aufnahmeraum (62) für das Zweirad (28) zumindest teilweise einfasst, und eine an einer dem Boden (116) abgewandten Seite angeordnete Einführöffnung (64) für das Zweirad (28),
wobei die Verpackungsvorrichtung (10) Längsseitenwände (36, 38) und Querseitenwände (40, 42) umfasst, die eine Längsrichtung (44) und eine quer und insbesondere senkrecht dazu ausgerichtete Querrichtung (46) definieren,
wobei die Verpackungsvorrichtung (10) ein vom Boden (116) in den Aufnahmeraum (62) abstehendes erstes Stützelement (118) umfasst und ein zweites Stützelement (78), das im Abstand zum Boden (116) und vorzugsweise in Längsrichtung (44) im Abstand zum ersten Stützelement (118) angeordnet ist und eine Radaufnahme (232) zwischen den Stützelementen (78, 118) gebildet ist, wobei die Stützelemente (78, 118) an einander abgewandten Seiten des Rades (138) anlegbar sind,
**dadurch gekennzeichnet dass**
das zweite Stützelement (78) an einer Querseitenwand (40) oder an einer Längsseitenwand (36, 38) des Mantels (34) gehalten und dabei faltbar mit der Querseitenwand (40) oder der Längsseitenwand (36, 38) verbunden ist, so dass die Stützelemente (78, 118) relativ zueinander zum Erweitern der Radaufnahme (232) beweglich sind.

2. Verpackungsvorrichtung nach Anspruch 1, **dadurch gekennzeichnet, dass** am Boden (116) zwischen dem ersten Stützelement (118) und der nächstgelegenen Querseitenwand (40) zumindest abschnittsweise eine Rinne (142) angeordnet oder gebildet ist, die in Querrichtung (46) vorzugsweise zumindest abschnittsweise von am Boden (116) angeordneten Erhöhungen (144, 146) seitlich begrenzt ist.

3. Verpackungsvorrichtung nach einem der voranstehenden Ansprüche, **dadurch gekennzeichnet, dass** das zweite Stützelement (78) an einem Rand (66) der Einführöffnung (64) am Mantel (34) festgelegt ist.

4. Verpackungsvorrichtung nach einem der voranstehenden Ansprüche, **dadurch gekennzeichnet, dass** das zweite Stützelement (78) von einer Einbringstellung, in der die Einführöffnung (64) freigegeben ist, durch die Einführöffnung (64) zumindest abschnittsweise in den Aufnahmeraum (62) in eine Fixierstellung, in der das zweite Stützelement (78) zur Anlage an das Rad (138) und/oder in Eingriff mit dem Rad (138) bringbar ist, und umgekehrt überführbar ist.

5. Verpackungsvorrichtung nach einem der voranstehenden Ansprüche, **dadurch gekennzeichnet, dass** das zweite Stützelement (78) einen Aufnahmeschlitz (90) für das Rad (138) aufweist und/oder dass das zweite Stützelement (78) in Querrichtung (46) formschlüssig im Aufnahmeraum (62) angeordnet ist.

6. Verpackungsvorrichtung nach einem der voranstehenden Ansprüche, **dadurch gekennzeichnet, dass** die Verpackungsvorrichtung (10) ein drittes Stützelement (94) umfasst, das im Abstand zum Boden (116) sowie in Längsrichtung (44) im Abstand zum ersten Stützelement (118) und zweiten Stützelement (78) angeordnet ist und zum Anlegen an den Rahmen (140) ausgebildet ist, insbesondere ein Steuerrohr (190) oder einen Vorbau des Zweirads (28).

7. Verpackungsvorrichtung nach Anspruch 6, **dadurch gekennzeichnet, dass** zumindest eines der Folgenden gilt:
- das dritte Stützelement (94) ist am Mantel (34) festgelegt, insbesondere an einem Rand (66) der Einführöffnung (64);
- das dritte Stützelement (94) ist an einer Querseitenwand (42) oder einer Längsseitenwand (36, 38) des Mantels (34) gehalten und insbesondere faltbar mit der Querseitenwand (42) oder der Längsseitenwand (36, 38) verbunden.

8. Verpackungsvorrichtung nach Anspruch 6 oder 7, **dadurch gekennzeichnet, dass** das dritte Stützelement (94) von einer Einbringstellung, in der die Einführöffnung (64) freigegeben ist, durch die Einführöffnung (64) zumindest abschnittsweise in den Aufnahmeraum (62) in eine Fixierstellung, in der das Stützelement (94) zur Anlage am Rahmen (140) und/oder in Eingriff mit dem Rahmen (140) bringbar ist, und umgekehrt überführbar ist.

9. Verpackungsvorrichtung nach einem der Ansprüche 6 bis 8, **dadurch gekennzeichnet, dass** das dritte Stützelement (94) einen Aufnahmeschlitz (104) für den Rahmen (140) aufweist und/oder dass das dritte Stützelement (94) in Querrichtung (46) formschlüssig im Aufnahmeraum (62) positioniert ist.

10. Verpackungsvorrichtung nach einem der Ansprüche 6 bis 9, **dadurch gekennzeichnet, dass** das zweite Stützelement (78) und das dritte Stützelement (94) an einander gegenüberliegenden Querseitenwänden (40, 42) angeordnet sind, insbesondere dass das zweite Stützelement (78) und das dritte Stützelement (118) in voneinander weg weisenden Richtungen aus dem Aufnahmeraum (62) heraus in eine jeweilige Einbringstellung und aus dieser zumindest abschnittsweise in den Aufnahmeraum (62) hinein in eine jeweilige Fixierstellung überführbar sind.

11. Verpackungsvorrichtung nach einem der voranstehenden Ansprüche, **dadurch gekennzeichnet, dass** die Verpackungsvorrichtung (10) eine Umverpackung (12) umfasst, die eine Bodenwand (30) und den Mantel (34) aufweist, und eine auf der Bodenwand (30) angeordnete und in die Umverpackung (12) eingelegte oder einlegbare Innenverpackung (14), die den Boden (116) vorzugsweise zumindest abschnittsweise ausbildet.

12. Verpackungsvorrichtung nach einem der voranstehenden Ansprüche, **dadurch gekennzeichnet, dass** die Verpackungsvorrichtung (10) eine Deckenwand (68) zum Verschließen der Einführöffnung (64) in einer Schließstellung umfasst und/oder dass ein Wandelement (52) einer Längsseitenwand (36) von einer Freigabestellung, in der an der Längsseitenwand (36) eine Befüllöffnung (56) gebildet ist, in eine Schließstellung überführbar ist, in der die Befüllöffnung (56) verschlossen ist, und umgekehrt überführbar ist.

13. Verpackungsvorrichtung nach einem der voranstehenden Ansprüche, **gekennzeichnet durch** eine Fertigung der Verpackungsvorrichtung (10) aus einem Papiermaterial, insbesondere aus Wellpappe.

14. Verpackungsvorrichtung nach einem der voranstehenden Ansprüche, **dadurch gekennzeichnet, dass** die Verpackungsvorrichtung (10) im Aufnahmeraum (62) ein Stützteil (196) umfasst und ein Aufnahmeteil (18), wobei das Stützteil (196) vom Boden (116) absteht und eine Mehrzahl von Eingriffselementen (200) umfasst, mit denen das Aufnahmeteil (18) mit korrespondierenden Eingriffselementen (210) in Eingriff steht, und wobei das Aufnahmeteil (18) in einer Mehrzahl von Relativpositionen zum Stützteil (196) positionierbar ist und Zweiradteile und/oder Zubehör am oder im Aufnahmeteil (18) positionierbar sind.

15. Verpackungsvorrichtung nach einem der voranstehenden Ansprüche, **dadurch gekennzeichnet, dass** die Verpackungsvorrichtung (10) ein Aufnahmeteil (16) für ein Rad (194) des Zweirads (28) umfasst, insbesondere ein Vorderrad (194), mit zwei im Abstand zueinander angeordneten Wandelementen (116, 118), wobei das Aufnahmeteil (16) frei im Aufnahmeraum (62) positionierbar ist.

## Claims

1. Packaging device for packaging a two-wheeler (28) comprising a frame (140) and at least one wheel (138) mounted thereon, in particular a bicycle (28), the device (10) comprising
a base (116), a casing (34), which at least partially encloses a receiving space (62) for the two-wheeler (28), and an insertion opening (64) for the two-wheeler (28), which is arranged on a side facing away from the base (116),
wherein the packaging device (10) comprises longitudinal side walls (36, 38) and transverse side walls (40, 42) which define a longitudinal direction (44) and a transverse direction (46) oriented transversely and in particular perpendicularly thereto,
wherein the packaging device (10) comprises a first support element (118), which projects from the base (116) into the receiving space (62), and a second support element (78), which is arranged at a distance from the base (116) and, preferably in the longitudinal direction (44), at a distance from the first support element (118), and a wheel receptacle (232) is formed between the support elements (78, 118), wherein the support elements (78, 118) are placeable on opposite sides of the wheel (138),
**characterized in that**
the second support element (78) is held on a transverse side wall (40) or on a longitudinal side wall (36, 38) of the casing (34) and is foldably connected to the transverse side wall (40) or the longitudinal side wall (36, 38), so that the support elements (78, 118) are movable relative to one another to expand the wheel receptacle (232).

2. Packaging device in accordance with claim 1, **characterized in that** a channel (142) is arranged or formed, at least in portions, on the base (116) between the first support element (118) and the nearest transverse side wall (40), which channel is laterally delimited in the transverse direction (46), preferably at least in portions, by elevations (144, 146) arranged on the base (116).

3. Packaging device in accordance with any one of the preceding claims, **characterized in that** the second support element (78) is fixed to the casing (34) at an edge (66) of the insertion opening (64).

4. Packaging device in accordance with any one of the preceding claims, **characterized in that** the second support element (78) is transferable from an introduction position, in which the insertion opening (64) is exposed, through the insertion opening (64), at least in portions, into the receiving space (62) to a fixing position, in which the second support element (78) can be brought to rest against the wheel (138) and/or into engagement with the wheel (138), and vice versa.

5. Packaging device in accordance with any one of the preceding claims, **characterized in that** the second support element (78) has a receiving slot (90) for the wheel (138) and/or **in that** the second support element (78) is arranged form-fittingly in the receiving space (62) in the transverse direction (46).

6. Packaging device in accordance with any one of the preceding claims, **characterized in that** the packaging device (10) comprises a third support element (94) which is arranged at a distance from the base (116) and, in the longitudinal direction (44), at a distance from the first support element (118) and second support element (78) and is designed to be placed on the frame (140), in particular a head tube (190) or a stem of the two-wheeler (28).

7. Packaging device in accordance with claim 6, **characterized in that** at least one of the following applies:
- the third support element (94) is fixed to the casing (34), in particular at an edge (66) of the insertion opening (64);
- the third support element (94) is held on a transverse side wall (42) or a longitudinal side wall (36, 38) of the casing (34) and is in particular foldably connected to the transverse side wall (42) or the longitudinal side wall (36, 38).

8. Packaging device in accordance with claim 6 or 7, **characterized in that** the third support element (94) is transferable from an introduction position, in which the insertion opening (64) is exposed, through the insertion opening (64), at least in portions, into the receiving space (62) to a fixing position, in which the support element (94) can be brought to rest against the frame (140) and/or into engagement with the frame (140), and vice versa.

9. Packaging device in accordance with any one of claims 6 to 8, **characterized in that** the third support element (94) has a receiving slot (104) for the frame (140) and/or **in that** the third support element (94) is form-fittingly positioned in the receiving space (62) in the transverse direction (46).

10. Packaging device in accordance with any one of claims 6 to 9, **characterized in that** the second support element (78) and the third support element (94) are arranged on mutually opposite transverse side walls (40, 42), in particular **in that** the second support element (78) and the third support element (118) are transferable, in directions pointing away from one another, out of the receiving space (62) to a respective introduction position and from this, at least in portions, into the receiving space (62) to a respective fixing position.

11. Packaging device in accordance with any one of the preceding claims, **characterized in that** the packaging device (10) comprises an outer packaging (12), which has a base wall (30) and the casing (34), and an inner packaging (14), which is arranged on the base wall (30), is inserted or can be inserted into the outer packaging (12) and preferably forms the base (116) at least in portions.

12. Packaging device in accordance with any one of the preceding claims, **characterized in that** the packaging device (10) comprises a top wall (68) for closing the insertion opening (64) in a closed position and/or **in that** a wall element (52) of a longitudinal side wall (36) is transferable from an open position, in which a filling opening (56) is formed on the longitudinal side wall (36), to a closed position, in which the filling opening (56) is closed, and vice versa.

13. Packaging device in accordance with any one of the preceding claims, **characterized by** producing the packaging device (10) from a paper material, in particular from corrugated cardboard.

14. Packaging device in accordance with any one of the preceding claims, **characterized in that** the packaging device (10) in the receiving space (62) comprises a support part (196) and a receiving part (18), wherein the support part (196) projects from the base (116) and comprises a plurality of engagement elements (200) with which the receiving part (18) is in engagement by means of corresponding engagement elements (210), and wherein the receiving part (18) is positionable in a plurality of positions relative to the support part (196) and two-wheel parts and/or accessories are positionable on or in the receiving part (18).

15. Packaging device in accordance with any one of the preceding claims, **characterized in that** the packaging device (10) comprises a receiving part (16) for a wheel (194) of the two-wheeler (28), in particular a front wheel (194), comprising two wall elements (116, 118) which are arranged at a distance from one another, wherein the receiving part (16) is freely positionable in the receiving space (62).

## Revendications

1. Dispositif d'emballage pour l'emballage d'un deux-roues (28) avec un cadre (140) et au moins une roue (138) montée contre celui-ci, en particulier d'une bicyclette (28), comprenant
un fond (116), une enveloppe (34), qui enferme au moins partiellement un espace de réception (62) pour le deux-roues (28), et une ouverture d'introduction (64) pour le deux-roues (28) agencée sur un côté opposé au fond (116),
dans lequel le dispositif d'emballage (10) comprend des parois latérales longitudinales (36, 38) et des parois latérales transversales (40, 42) qui définissent une direction longitudinale (44) et une direction transversale (46) orientée transversalement et en particulier perpendiculairement à celles-ci,
dans lequel le dispositif d'emballage (10) comprend un premier élément d'appui (118) espacé du fond (116) jusque dans l'espace de réception (62) et un deuxième élément d'appui (78) qui est agencé à distance du fond (116) et de préférence dans la direction longitudinale (44) à distance du premier élément d'appui (118) et une réception de roue (232) est formée entre les éléments d'appui (78, 118), dans lequel les éléments d'appui (78, 118) peuvent être appliqués sur des côtés opposés l'un à l'autre de la roue (138),
**caractérisé en ce que** le deuxième élément d'appui (78) est maintenu contre une paroi latérale transversale (40) ou contre une paroi latérale longitudinale (36, 38) de l'enveloppe (34) et ce faisant est relié de façon pliable à la paroi latérale transversale (40) ou à la paroi latérale longitudinale (36, 38), de sorte que les éléments d'appui (78, 118) soient mobiles l'un par rapport à l'autre pour un élargissement de la réception de roue (232).

2. Dispositif d'emballage selon la revendication 1, **caractérisé en ce que** contre le fond (116) entre le premier élément d'appui (118) et la paroi latérale transversale (40) la plus proche est agencée ou formée au moins par endroits une rainure (142) qui dans la direction transversale (46) est délimitée latéralement de préférence au moins par endroits par des surélévations (144, 146) agencées contre le fond (116).

3. Dispositif d'emballage selon l'une des revendications précédentes, **caractérisé en ce que** le deuxième élément d'appui (78) est fixé contre l'enveloppe (34) contre un bord (66) de l'ouverture d'introduction (64).

4. Dispositif d'emballage selon l'une des revendications précédentes, **caractérisé en ce que** le deuxième élément d'appui (78) peut être transféré d'une position d'insertion dans laquelle l'ouverture d'introduction (64) est libérée, à travers l'ouverture d'introduction (64) au moins par endroits jusque dans l'espace de réception (62), à une position de fixation dans laquelle le deuxième élément d'appui (78) peut être amené pour une application contre la roue (138) et/ou en prise avec la roue (138), et inversement.

5. Dispositif d'emballage selon l'une des revendications précédentes, **caractérisé en ce que** le deuxième élément d'appui (78) présente une fente de réception (90) pour la roue (138) et/ou **en ce que** le deuxième élément d'appui (78) est agencé dans l'espace de réception (62) par coopération de forme dans la direction transversale (46).

6. Dispositif d'emballage selon l'une des revendications précédentes, **caractérisé en ce que** le dispositif d'emballage (10) comprend un troisième élément d'appui (94) qui est agencé à distance du fond (116) ainsi que dans la direction longitudinale (44) à distance du premier élément d'appui (118) et du deuxième élément d'appui (78) et conçu pour une application contre le cadre (140), en particulier un tube de direction (190) ou une potence du deux-roues (28).

7. Dispositif d'emballage selon la revendication 6, **caractérisé en ce que** s'applique au moins l'un de ce qui suit :
- le troisième élément d'appui (94) est fixé contre l'enveloppe (34), en particulier contre un bord (66) de l'ouverture d'introduction (64) ;
- le troisième élément d'appui (94) est maintenu contre une paroi latérale transversale (42) ou une paroi latérale longitudinale (36, 38) de l'enveloppe (34) et en particulier relié de façon pliable à la paroi latérale transversale (42) ou à la paroi latérale longitudinale (36, 38).

8. Dispositif d'emballage selon la revendication 6 ou 7, **caractérisé en ce que** le troisième élément d'appui (94) peut être transféré d'une position d'insertion dans laquelle l'ouverture d'introduction (64) est libérée, à travers l'ouverture d'introduction (64) au moins par endroits jusque dans l'espace de réception (62), à une position de fixation dans laquelle l'élément d'appui (94) peut être amené pour une application contre le cadre (140) et/ou en prise avec le cadre (140), et inversement.

9. Dispositif d'emballage selon l'une des revendications 6 à 8, **caractérisé en ce que** le troisième élément d'appui (94) présente une fente de réception (104) pour le cadre (140) et/ou **en ce que** le troisième élément d'appui (94) est positionné dans l'espace de réception (62) par coopération de forme et dans la direction transversale (46).

10. Dispositif d'emballage selon l'une des revendications 6 à 9, **caractérisé en ce que** le deuxième élément d'appui (78) et le troisième élément d'appui (94) sont agencés contre des parois latérales transversales (40, 42) opposées l'une à l'autre, en particulier **en ce que** le deuxième élément d'appui (78) et le troisième élément d'appui (118) peuvent être transférés dans des directions s'éloignant l'une de l'autre depuis l'espace de réception (62) jusque dans une position d'insertion respective et depuis celle-ci au moins par endroits jusqu'à l'intérieur de l'espace de réception (62) jusqu'à une position de fixation respective.

11. Dispositif d'emballage selon l'une des revendications précédentes, **caractérisé en ce que** le dispositif d'emballage (10) comprend un suremballage (12), qui présente une paroi de fond (30) et l'enveloppe (34), et un emballage intérieur (14) agencé sur la paroi de fond (30) et qui est ou peut être inséré dans le suremballage (12), lequel emballage intérieur forme le fond (116) de préférence au moins par endroits.

12. Dispositif d'emballage selon l'une des revendications précédentes, **caractérisé en ce que** le dispositif d'emballage (10) comprend une paroi de recouvrement (68) pour une fermeture de l'ouverture d'introduction (64) dans une position de fermeture et/ou **en ce qu'**un élément de paroi (52) d'une paroi latérale longitudinale (36) peut être transféré d'une position de libération dans laquelle est formée une ouverture de remplissage (56) contre la paroi latérale longitudinale (36) à une position de fermeture dans laquelle l'ouverture de remplissage (56) est fermée, et inversement.

13. Dispositif d'emballage selon l'une des revendications précédentes, **caractérisé par** une fabrication du dispositif d'emballage (10) dans un matériau papier, en particulier en carton ondulé.

14. Dispositif d'emballage selon l'une des revendications précédentes, **caractérisé en ce que** le dispositif d'emballage (10) comprend une pièce d'appui (196) dans l'espace de réception (62) et une pièce de réception (18), dans lequel la pièce d'appui (196) est espacée du fond (116) et comprend une pluralité d'éléments de prise (200) avec lesquels la pièce de réception (18) se trouve en prise avec des éléments de prise (210) correspondants, et dans lequel la pièce de réception (18) peut être positionnée dans une pluralité de positions relatives par rapport à la pièce d'appui (196) et des pièces de deux-roues et/ou des accessoires peuvent être positionnés contre ou dans la pièce de réception (18).

15. Dispositif d'emballage selon l'une des revendications précédentes, **caractérisé en ce que** le dispositif d'emballage (10) comprend une pièce de réception (16) pour une roue (194) du deux-roues (28), en particulier une roue avant (194), avec deux éléments de paroi (116, 118) agencés à distance l'un de l'autre, dans lequel la pièce de réception (16) peut être positionnée librement dans l'espace de réception (62).
